# EUROPÄISCHE PATENTSCHRIFT

(11) **EP 3 878 619 B1**
(45) Veröffentlichungstag und Bekanntmachung des Hinweises auf die Patenterteilung: **02.07.2025**
(21) Anmeldenummer: 20163205.6
(22) Anmeldetag: 13.03.2020
(51) Int. Cl.: B29C 44/56, E04B 1/68

(54) **VERFAHREN ZUM PARTIELLEN IMPRÄGNIEREN EINES SCHAUMSTOFFS**
METHOD FOR PARTIALLY IMPREGNATING A FOAM
PROCÉDÉ D'IMPRÉGNATION PARTIELLE D'UNE MOUSSE

(43) Veröffentlichungstag der Anmeldung: 15.09.2021
(73) Patentinhaber: Hanno-Werk GmbH & Co. KG, 30880 Laatzen (DE)
(72) Erfinder: BRIEHAHN, Michael, 50733 Köln (DE); HOHLFELD, Andreas, 31832 Springe (DE)
(74) Vertreter: Patentanwälte Thömen & Körner

(56) Entgegenhaltungen:
- EP-A2- 2 620 566
- DE-A1- 3 443 074
- DE-U1- 202011 005 415
- DE-U1- 202012 103 636
- US-A1- 2005 242 462

## Beschreibung

Die Erfindung betrifft ein Verfahren zum partiellen Imprägnieren eines Schaumstoffs, insbesondere eines Fugendichtungsbandes.

Fugendichtungsbänder, die einen Schaumstoff aufweisen, sind zum Abdichten insbesondere gegen Luftzug und Schlagregen beispielsweise aus der DE 19641415 C2, der DE 20009674 U1, der WO 2012/167762 A1, der DE 1 000 946 A, DE 40 20 230 A1 oder der DE 34 07 995 A1 bekannt und werden in der Bautechnik zum Abdichten insbesondere von Bauteilen, beispielsweise von Fenster- und Türrahmen, gegenüber einem Mauerwerk, beispielsweise einer Gebäudewandöffnung, oder einer Bewegungsfuge in einer Fassade verwendet. Solche Fugendichtungsbänder sind üblicherweise, insbesondere zum Zwecke der verzögerten Rückstellung, homogen oder inhomogen mit einem Imprägnat imprägniert.

Aus der EP 0 451 535 B1 ist ein Verfahren zur Imprägnierung eines Schaumstoffes bekannt, bei dem auf einer Anlage Formteil-Rohlinge aus Schaumstoff mit einem Imprägnat dadurch imprägniert werden, dass die Formteil-Rohlinge durch einen Walzenspalt zweier sich gegensinnig bewegenden Walzen geführt werden und das Imprägnat in den Walzenspalt gegeben wird, wobei der Walzenspalt kleiner eingestellt ist, als eine unbeeinflusste Dicke der Formteil-Rohlinge. Dabei wird die Eigenart des Schaumstoffes, sich nach Komprimierung zurückzustellen, ausgenutzt. Bevorzugt wird das Imprägnat beidseitig zu dem bahnenförmigen Formteil-Rohlingen auf den Breitflächen zugegeben.

WO 2005/118970 A1 offenbart einen Schaumstoff, der mit einem Imprägnat getränkt wird, wobei der Schaumstoff in ein Tauchbecken eingebracht, anschließend gewalzt und schließlich getrocknet wird.

EP 1 919 993 B1 beschreibt ein Verfahren, bei dem ein Schaumstoff zwischen zwei sich in gleichsinniger Richtung drehenden Walzen hindurchgeführt wird, wobei der Abstand der Walzen so gewählt ist, dass der Schaumstoff jeweils zusammengepresst wird. Das Imprägnat, mit dem der Schaumstoff imprägniert wird, wird auf die horizontal nebeneinander liegenden Walzen aufgegeben, so dass sich an der Stelle, an der der Schaumstoff durch die Walzen hindurchbewegt wird, ein Flüssigkeitspool ausbildet. Durch die Rotationsbewegung der Walzen und das Pressen des Schaumstoffes wird das Imprägnat in den Schaumstoff eingepresst. Nach dem Aufbringen der Imprägnats und dem Pressen des Schaumstoffes wird der so imprägnierte Schaumstoff in einem Trockenofen getrocknet. Gegebenenfalls wird der Schaumstoff mehrfach nach dem gleichen Imprägnierverfahren imprägniert. Neben dem Auftragen des Imprägnats und dem anschließenden Pressen ist es auch möglich, den Schaumstoff in dem Imprägnat zu tränken und anschließend zu pressen. Zum Tränken wird der Schaumstoff zum Beispiel durch ein Bad, welches das Imprägnat enthält, gezogen. In einer weiteren Verfahrensvariante ist es auch möglich, den Schaumstoff zunächst mit einem ersten Imprägnat und anschließend mit einem zweiten Imprägnat zu imprägnieren. Danach wird der imprägnierte Schaumstoff getrocknet, wobei eine erste Trocknung direkt nach der ersten Imprägnierung und eine zweite Trocknung nach der zweiten Imprägnierung erfolgen können. Neben dem Durchführen des Schaumstoffes durch einen Spalt zwischen zwei rotierenden Walzen ist es auch möglich, den zum Imprägnieren notwendigen Druck dadurch auszuüben, dass der mit den Dispersionen getränkte Schaumstoff auf einem Förderband transportiert wird und eine Walze, die sich mit der gleichen Umfangsgeschwindigkeit dreht, mit der der Schaumstoff bewegt wird, auf den Schaumstoff presst. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.

Aus der EP 0 011 211 B1 ist ein Verfahren zur Herstellung eines imprägnierten Schaumstoffs bekannt, bei dem das Imprägnat auf den Schaumstoff gesprüht, mittels Vakuum in den Schaumstoff eingesaugt oder mit einem Rakel in den Schaumstoff eingedrückt wird. Genannt ist auch ein Verfahren, bei dem der Schaumstoff durch Zusammenpressen und anschließendes Entspannen mit einem Imprägnat beladen und die überflüssige Menge abgequetscht wird. Die Imprägnierung kann dabei kontinuierlich erfolgen, indem der Schaumstoff im Imprägnat mittels Walzen zusammengequetscht wird, wobei die überschüssige Menge an Imprägnat außerhalb des Imprägnats mittels Walzen abgequetscht wird. Sowohl nach dem diskontinuierlichen als auch nach dem kontinuierlichen Verfahren ist es möglich, durch wiederholte Press- und Entspannungsvorgänge im Imprägnat die Menge an Imprägnat, die sich in und auf dem Schaumstoff befindet, zu erhöhen. Nicht nur durch Tauchen, sondern auch durch Besprühen kann das Imprägnat auf den Schaumstoff aufgebracht werden. Dieses Verfahren besitzt den Vorteil, dass der Schaumstoff lokal behandelbar ist, so dass Zonen mit unterschiedlichen Imprägnat erhalten werden können. Die besprühten Schaumstoffe können, um ein tieferes Eindringen der Dispersion zu gewährleisten, sowohl mittels Druckluft als auch durch Walzenpaare behandelt werden. Eine weitere Möglichkeit des Aufbringens der Dispersion besteht darin, diese einzurakeln oder mittels Vakuum einzusaugen.

WO 2018/127381 A1 beschreibt ein Verfahren, bei dem der Schaumstoff mit einem Imprägnat getränkt wird, indem der Schaumstoff in das Imprägnat eingetaucht wird, so dass das Imprägnat, bevorzugt mit Hilfe von Tauch- oder Quetschwalzen, in die Poren des Schaumstoffs eindringt und diesen vollständig durchdringt. Nach dem Imprägnieren wird der Schaumstoff mittels mindestens einer Walze, insbesondere mit einem Walzenpaar, gewalzt. Mittels der wenigstens einen Walze wird ein Teil des Imprägnats aus dem Schaumstoffkörper bis zum gewünschten Imprägnierungsgrad aus- bzw. abgequetscht.

Durch Variation des Walzendruckes kann der Imprägnierungsgrad, das heißt die Menge des vom Schaumstoff aufgenommenen Imprägnats, variiert werden. Anschließend wird der Schaumstoff getrocknet und geschnitten. Es ist auch möglich, den Schaumstoff unter Druck bzw. im Vakuum oder mit Hilfe einer Sprüheinrichtung zu imprägnieren bzw. zu beschichten.

Aus der EP 2 784 231 B1 ist ein Verfahren bekannt, bei dem der Schaumstoff inhomogen imprägniert ist, derart, dass ein im Querschnitt des Schaumstoffs vorhandener Niederbereich stärker imprägniert ist als ein daran anschließender Höhenbereich. Dagegen sind solche im Querschnitt rechteckige Schaumstoffe bei Anwendung des dort genannten Verfahrens homogen imprägniert.

EP 1 705 232 A1 offenbart ein Verfahren, bei dem ein Schaumstoff mit einem Imprägnat durch vollständige oder teilweise Benetzung der inneren und äußeren Zellstruktur durch Bestreichen, Besprühen oder Tränken in einem Tauchbecken behandelt wird. Durch Bestreichen oder Besprühen des Dichtungselements mit einem Imprägnat kann bestimmt werden, welche Bereiche des Schaumstoffs mit einem bestimmten Imprägnat versehen werden sollen. Das Imprägnieren kann in mehrere Schritte aufgeteilt werden, wobei jeweils nur Teilbereiche des Schaumstoffs unterschiedlich imprägniert werden können. Vielfältige Kombinationen von Produkteigenschaften sind somit vorstellbar.

EP 2 620 566 A2 offenbart ein Verfahren zum inhomogenen Imprägnieren eines Fugendichtbands.

US 2005/242462 A1 und DE 34 43 074 A1 offenbaren Vorrichtungen zum Imprägnieren eines Schaumstoffs.

Der Erfindung liegt die Aufgabe zugrunde ein verbessertes Verfahren zum partiellen Imprägnieren eines Schaumstoffs, insbesondere eines Fugendichtungsbandes, zur Verfügung zu stellen.

Diese Aufgabe wird mittels eines Verfahrens mit den Merkmalen des Anspruchs 1 gelöst. Weiterbildungen und vorteilhafte Ausgestaltungen der Erfindung können sich aus den Unteransprüchen ergeben.

Bei dem erfindungsgemäßen Verfahren zum partiellen Imprägnieren eines Schaumstoffs, insbesondere eines Fugendichtungsbandes, wird an vorgegebenen voneinander beabstandeten Stellen des Schaumstoffs jeweils eine vorgegebene Menge an Imprägnat in den Schaumstoff gedrückt.

Die vorgegebenen Mengen an Imprägnat können dazu gleichzeitig und/oder hintereinander an mehreren vorgegebenen voneinander beabstandeten Stellen in den Schaumstoff gedrückt werden.

Das Imprägnat dringt erfindungsgemäß an den vorgegebenen voneinander beabstandeten Stellen druckbeaufschlagt in die Poren des Schaumstoffs ein. Dadurch, dass die vorgegebenen Stellen voneinander beabstandet sind, und/oder dadurch, dass die voneinander beabstandeten Stellen nur einen bestimmten Bereich des Schaumstoffs betreffen, lässt sich gezielt ein inhomogen imprägnierter Schaumstoff herstellen.

Die Druckbeaufschlagung des Imprägnats kann dabei durch einen Unterdruck, durch den jeweils eine vorgegebene Menge an Imprägnat an den vorgegebenen voneinander beabstandeten Stellen des Schaumstoffs in den Schaumstoff gesogen wird, oder vorzugsweise durch einen Überdruck, durch den jeweils eine vorgegebene Menge an Imprägnat an den vorgegebenen voneinander beabstandeten Stellen des Schaumstoffs in den Schaumstoff gedrückt wird, erfolgen. Der erforderliche Druck kann hierbei durch eine geeignete Pumpe bereitgestellt werden. Für bestimmte Anwendungen kann es auch ausreichen, dass die vorgegebenen Mengen an Imprägnat mittels der eigenen Schwerkraft oder über eine anliegende Zentrifugalkraft an den vorgegebenen voneinander beabstandeten Stellen in den Schaumstoff gedrückt werden.

Insbesondere kann der Schaumstoff aber dadurch, dass die Stellen voneinander beabstandet sind, ganz gezielt imprägniert werden. Dabei können die Stellen - je nach gewünschten Produkteigenschaften - mehr oder weniger weit voneinander beabstandet sein. Durch das erfindungsgemäße Verfahren lassen sich die Eigenschaften beispielsweise von komprimierbaren Fugendichtungsbändern ganz gezielt auf ihren späteren Verwendungszweck einstellen.

Dementsprechend ist auch ein Fugendichtungsband offenbart, das einen Schaumstoff umfasst, der mittels eines erfindungsgemäßen Verfahrens, wie es zuvor oder nachfolgend beschrieben wird, partiell imprägniert ist. Ein solches Fugendichtungsband kann vorteilhaft einen Schaumstoff aufweisen, der vor der erfindungsgemäßen partiellen Imprägnierung bereits nach herkömmlichen Verfahren imprägniert wurde, also quasi vorimprägniert war und mit dem erfindungsgemäßen Verfahren quasi partiell nachimprägniert wird.

Ein solches Fugendichtungsband weist zwei Längsseiten sowie eine im Einbauzustand des Fugendichtungsbandes an die eine Fugenflanke, insbesondere eines Mauerwerks, angrenzende Oberseite und eine im Einbauzustand des Fugendichtungsbandes an die gegenüberliegende Fugenflanke, insbesondere des Bauteils, angrenzende Unterseite auf. Die Breite des Fugendichtungsbandes ist somit der Abstand zwischen zwei Längsseiten. Die Unterseite eines solchen Fugendichtungsbandes ist an dem abzudichtenden Bauteil, beispielsweise einem Fenster- und Türrahmen, anklebbar. Nach dem Einbau des Bauteils, beispielsweise in eine Gebäudewandöffnung, expandiert das zuvor komprimierte Fugendichtungsband, stellt sich also elastisch zurück, so dass die Oberseite des Fugendichtungsbandes am Mauerwerk der Gebäudewandöffnung angrenzt bzw. anliegt, und so das Bauteil am Mauerwerk der Gebäudewandöffnung abdichtet. Gattungsgemäße Fugendichtungsbänder werden zur Abdichtung auch in Fassadenfugen, insbesondere in Bestandsfugen, eingebracht.

Ein Fugendichtungsband, das einen Schaumstoff umfasst, der mittels eines erfindungsgemäßen Verfahrens, wie es zuvor oder nachfolgend beschrieben wird, partiell imprägniert ist, kann zwischen der Oberseite und Unterseite sowie parallel bzw. nahezu parallel zu den Längsseiten eine oder mehr als eine in Längsrichtung verlaufende Trennschicht, beispielsweise in Form einer Klebstoffschicht, Membranschicht und/oder Folienschicht aufweisen.

Das für das erfindungsgemäße Verfahren verwendete Imprägnat wird derart gewählt, dass der imprägnierte Bereich aufgrund der Auswahl des Imprägnats besondere wenigstens eine, die Eigenschaft des Fugendichtungsbandes verändernde Funktion aufweist. So können bestimmte Bereiche des Fugendichtungsbandes aufgrund der erfindungsgemäßen partiellen Imprägnierung mit einem größeren Raumgewicht versehen witterungsbeständiger, luftdichter, wasserdampfdiffusionshemmender, wärmedämmender, feuerbeständiger und/oder mit einem größeren Raumgewicht versehen ausgebildet werden.

Bei dem Imprägnat handelt es sich vorzugsweise um eine Lösung oder Dispersion wenigstens einer Substanz. Bei den Substanzen kann es sich um Schichtsilikate, Tonmineralien, Metalloxide, Metallhydroxide, Glaskugeln, thermoexpandierbare Substanzen, Ruß, Farbpigmente, Flammschutzmittel, Hydrophobierungsmittel, die Wärmeleitfähigkeit beeinflussende Substanzen, wie sie beispielsweise in der WO 2018/127381 A1 offenbart sind, insbesondere um Aerogele, und dergleichen handeln.

Das Imprägnat umfasst vorteilhaft ein Bindemittel, vorzugsweise eine wässrige Dispersion auf Basis eines Acrylsäureesters, besonders bevorzugt eine wässrige Dispersion eines Polyacrylsäurebutylesters. Für einige Anwendungen kann es auch vorteilhaft sein, wenn das Imprägnat ein Bindemittel auf Polyurethanbasis umfasst. Für gewisse Anwendungen kann es auch vorteilhaft sein, wenn das Imprägnat ein Bindemittel auf Wachsbasis umfasst. Für bestimmte Anwendungen kann es auch vorteilhaft sein, wenn das Imprägnat ein Bindemittel auf Bitumenbasis umfasst.

Es kann vorteilhaft sein, wenn der Schaumstoff offenzellig oder zumindest teilweise offenzellig ist.

Es kann zweckmäßig sein, wenn der Schaumstoff ein Polyurethanschaumstoff, vorzugsweise ein Polyurethanweichschaumstoff ist. Es kann vorteilhaft sein, wenn der Schaumstoff ein retikulierter Polyurethanschaumstoff ist. Es kann vorteilhaft sein, wenn der Schaumstoff rückstellfähig ist. Es kann vorteilhaft sein, wenn der Schaumstoff bereits vor der partiellen Imprägnierung aufgrund einer Imprägnierung nach einem herkömmlichen Verfahren bereits verzögert rückstellfähig ist. Es kann vorteilhaft sein, wenn der Schaumstoff im Bereich der erfindungsgemäß vorgenommen partiellen Imprägnierung stärker verzögert rückstellfähig ist als in anderen Bereichen.

Der Schaumstoff eines erfindungsgemäßen Fugendichtungsbandes kann in mehrere Schaumstoffelemente bzw. Schaumstoffabschnitte unterteilt sein. Die Schaumstoffelemente verlaufen in Längsrichtung und sind vorzugsweise in Breitenrichtung nebeneinander angeordnet. Für bestimmte Anwendungen kann es auch vorteilhaft sein, wenn die Schaumstoffelemente über die Breite zumindest teilweise übereinander angeordnet sind. Die Unterteilung kann sich beispielsweise durch wenigstens eine im Schaumstoff vorhandene Trennschicht, beispielsweise in Form einer Klebstoffschicht, Membranschicht und/oder Folienschicht ergeben. Die Unterteilung kann sich auch durch ein unterschiedliches Höhenprofil ergeben. Die Unterteilung kann sich auch durch die Verwendung unterschiedlicher Schaumstoffmaterialien, unterschiedlicher Dichten und/oder unterschiedlicher Zellstrukturen der Schaumstoffelemente ergeben. Weiterhin kann sich die Unterteilung durch eine unterschiedliche Imprägnierung der verschiedenen Schaumstoffelemente ergeben. Insbesondere im letzten Fall können die Schaumstoffelemente vorteilhaft einstückig verbunden sein oder bleiben. Kombinationen der vorgenannten Varianten sind ebenfalls möglich.

Es kann vorteilhaft sein, wenn ein oder mehr als ein Schaumstoffelement erfindungsgemäß imprägniert ist, indem an vorgegebenen voneinander beabstandeten Stellen des Schaumstoffelements jeweils eine vorgegebene Menge an Imprägnat in den Schaumstoff gedrückt wurde. Bei mehreren Schaumstoffelementen kann es vorteilhaft sein, wenn wenigstens zwei Schaumstoffelemente erfindungsgemäß, vorzugsweise mit unterschiedlichen Imprägnaten, imprägniert sind.

Durch das erfindungsgemäße Verfahren ist das Schaumstoffelement selbst oder der Schaumstoff, der das erfindungsgemäß imprägnierte Schaumstoffelement aufweist, partiell und damit inhomogen imprägniert.

Es kann vorteilhaft sein, wenn die Schaumstoffelemente jeweils einen unterschiedlichen Dichtbereich innerhalb eines Fugendichtungsbandes ausbilden. Es kann vorteilhaft sein, wenn wenigstens zwei Schaumstoffelemente unterschiedliche Raumgewichte aufweisen.

Es kann zweckmäßig sein, wenn wenigstens ein Schaumstoffelement ein Polyurethanschaumstoff, vorzugsweise ein Polyurethanweichschaumstoff ist. Dieser stellt sich nach einer Vorkomprimierung besonders gut innerhalb der Fuge zurück und sorgt für eine dauerhafte Abdichtung.

Es kann vorteilhaft sein, wenn die Schaumstoffelemente jeweils einen Funktionsbereich aufweisen, vorzugsweise einen ersten nach außen schlagregendichten Bereich, einen zweiten wärmedämmenden sowie schallmindernden Bereich und einen dritten nach innen luftdichten Bereich.

Es kann zweckmäßig sein, wenn das Fugendichtungsband komprimierbar, vorzugsweise vorkomprimiert ist.

Vorteilhaft kann das Fugendichtungsband in Rollenform vorkomprimiert und verzögert rückstellfähig sein. Vorzugsweise beträgt die Dicke des Fugendichtungsbandes im nicht komprimierten Zustand zwischen 10 mm und 100 mm, vorzugsweise zwischen 18 mm bis 60 mm.

Es kann von Vorteil sein, wenn das Fugendichtungsband einseitig selbstklebend ausgebildet ist. Die Seite kann vollflächig mit einer Selbstklebeschicht oder nicht vollflächig mit einer oder mehr als einer Selbstklebebahn beschichtet sein, welche vorzugsweise mit einem lösbaren Silikonpapier abgedeckt ist.

Es kann vorteilhaft sein, aus dem Stand der Technik bekannte, Schaumstoff oder Schaumstoffelemente aufweisende Fugendichtungsbänder anstelle der dort vorgesehenen partiellen Imprägnierung und/oder zusätzlich zu der dort vorgesehenen Imprägnierung mit dem erfindungsgemäßen Verfahren zu imprägnieren. Dementsprechend bezieht sich die Erfindung auch auf solche Fugendichtungsbänder, insbesondere auf die nachfolgend genannten.

Es kann vorteilhaft sein, wenn wenigstens ein Schaumstoffelement eines Fugendichtungsbandes, wie es Gegenstand der WO 2012/167762 A1 ist, mit dem erfindungsgemäßen Verfahren imprägniert ist. Der Offenbarungsgehalt der WO 2012/167762 A1 wird durch ausdrücklichen Verweis als zum Gegenstand der vorliegenden Anmeldung gehörig in diese aufgenommen.

Es kann vorteilhaft sein, wenn wenigstens ein Schaumstoffelement eines Fugendichtungsbandes, wie es Gegenstand der DE 196 41 415 A1 oder der DE 200 09 674 U1 ist, mit dem erfindungsgemäßen Verfahren imprägniert ist. Der Offenbarungsgehalt der DE 196 41 415 A1 und der DE 200 09 674 U1 wird durch ausdrücklichen Verweis als zum Gegenstand der vorliegenden Anmeldung gehörig in diese aufgenommen.

Es kann vorteilhaft sein, wenn wenigstens ein Schaumstoffelement oder ein Zusatz-Schaumstoffmaterial bzw. Schaumstoffstreifen eines Fugendichtungsbandes, wie es Gegenstand der EP 1 811 111 A2 ist, mit dem erfindungsgemäßen Verfahren imprägniert ist. Der Offenbarungsgehalt der EP 1 811 111 A2 wird durch ausdrücklichen Verweis als zum Gegenstand der vorliegenden Anmeldung gehörig in diese aufgenommen.

Es kann vorteilhaft sein, wenn wenigstens ein Schaumstoffelement eines profilierten Fugendichtungsbandes, wie es Gegenstand der WO 2009/138311 A1 ist, erfindungsgemäß mit dem erfindungsgemäßen Verfahren imprägniert ist. Der Offenbarungsgehalt der WO 2009/138311 A1 wird durch ausdrücklichen Verweis als zum Gegenstand der vorliegenden Anmeldung gehörig in diese aufgenommen. Es kann vorteilhaft sein, wenn wenigstens ein Schaumstoffelement eines Fugendichtungsbandes, wie es Gegenstand der EP 2 112 292 A2 ist, erfindungsgemäß mit dem erfindungsgemäßen Verfahren imprägniert ist. Der Offenbarungsgehalt der EP 2 112 292 A2 wird durch ausdrücklichen Verweis als zum Gegenstand der vorliegenden Anmeldung gehörig in diese aufgenommen.

Es kann vorteilhaft sein, wenn wenigstens ein Schaumstoffelement eines Fugendichtungsbandes, wie es Gegenstand der EP 2 784 231 A1 ist, erfindungsgemäß mit dem erfindungsgemäßen Verfahren imprägniert ist. Der Offenbarungsgehalt der EP 2 784 231 A2 wird durch ausdrücklichen Verweis als zum Gegenstand der vorliegenden Anmeldung gehörig in diese aufgenommen.

Es kann vorteilhaft sein, wenn wenigstens ein Schaumstoffelement eines Fugendichtungsbandes, wie es Gegenstand der EP 2 420 631 A2 ist, erfindungsgemäß mit dem erfindungsgemäßen Verfahren imprägniert ist. Der Offenbarungsgehalt der EP 2 420 631 A2 wird durch ausdrücklichen Verweis als zum Gegenstand der vorliegenden Anmeldung gehörig in diese aufgenommen. Es kann insbesondere von Vorteil sein, wenn das in der EP 2 420 631 A2 genannte Einlegeteil mit dem erfindungsgemäßen Verfahren imprägniert ist.

Es kann vorteilhaft sein, wenn wenigstens ein Schaumstoffelement eines Fugendichtungsbandes, wie es Gegenstand der EP 2 354 410 A2 ist, erfindungsgemäß mit dem erfindungsgemäßen Verfahren imprägniert ist. Der Offenbarungsgehalt der EP 2 354 410 A2 wird durch ausdrücklichen Verweis als zum Gegenstand der vorliegenden Anmeldung gehörig in diese aufgenommen. Es kann insbesondere von Vorteil sein, wenn wenigstens ein der in der EP 2 354 410 A2 genannten Schaumstoffstreifen mit dem erfindungsgemäßen Verfahren imprägniert ist.

Es kann vorteilhaft sein, wenn wenigstens ein Schaumstoffelement eines Fugendichtungsbandes, wie es Gegenstand der EP 2 065 548 A2 ist, erfindungsgemäß mit dem erfindungsgemäßen Verfahren imprägniert ist. Der Offenbarungsgehalt der EP 2 065 548 A2 wird durch ausdrücklichen Verweis als zum Gegenstand der vorliegenden Anmeldung gehörig in diese aufgenommen. Es kann insbesondere von Vorteil sein, wenn wenigstens ein der in der EP 2 065 548 A2 genannten Schaumstoffstreifen mit dem erfindungsgemäßen Verfahren imprägniert ist.

Es kann vorteilhaft sein, wenn wenigstens ein Schaumstoffelement eines Fugendichtungsbandes, wie es Gegenstand der WO 94/20701 A1 ist, erfindungsgemäß mit dem erfindungsgemäßen Verfahren imprägniert ist. Der Offenbarungsgehalt der WO 94/20701 A1 wird durch ausdrücklichen Verweis als zum Gegenstand der vorliegenden Anmeldung gehörig in diese aufgenommen. Es kann insbesondere von Vorteil sein, wenn wenigstens einer der in der WO 94/20701 A1 genannten Schaumstoffabschnitte bildendenden Rand-Längsbereiche mit dem erfindungsgemäßen Verfahren imprägniert ist.

Es kann vorteilhaft sein, wenn wenigstens ein Schaumstoffelement eines Fugendichtungsbandes, wie es Gegenstand der EP 2 982 821 A1 ist, erfindungsgemäß mit dem erfindungsgemäßen Verfahren imprägniert ist. Der Offenbarungsgehalt der EP 2 982 821 A1 wird durch ausdrücklichen Verweis als zum Gegenstand der vorliegenden Anmeldung gehörig in diese aufgenommen.

Es kann vorteilhaft sein, wenn wenigstens ein Schaumstoffelement eines Fugendichtungsbandes, wie es Gegenstand der EP 2 107 176 A1 ist, erfindungsgemäß mit dem erfindungsgemäßen Verfahren imprägniert ist. Der Offenbarungsgehalt der EP 2 107 176 A1 wird durch ausdrücklichen Verweis als zum Gegenstand der vorliegenden Anmeldung gehörig in diese aufgenommen.

Es kann vorteilhaft sein, wenn wenigstens ein Schaumstoffelement eines Fugendichtungsbandes, wie es Gegenstand der EP 2 415 942 A1 ist, erfindungsgemäß mit dem erfindungsgemäßen Verfahren imprägniert ist. Der Offenbarungsgehalt der EP 2 415 942 A1 wird durch ausdrücklichen Verweis als zum Gegenstand der vorliegenden Anmeldung gehörig in diese aufgenommen.

Es kann vorteilhaft sein, wenn wenigstens ein Schaumstoffelement eines Fugendichtungsbandes, wie es Gegenstand der EP 2 990 575 A1 ist, erfindungsgemäß mit dem erfindungsgemäßen Verfahren imprägniert ist. Der Offenbarungsgehalt der EP 2 990 575 A1 wird durch ausdrücklichen Verweis als zum Gegenstand der vorliegenden Anmeldung gehörig in diese aufgenommen.

Bei dem erfindungsgemäßen Verfahren kann es von Vorteil sein, wenn die vorgegebenen voneinander beabstandeten Stellen des Schaumstoffs auf der Oberfläche des Schaumstoffs angeordnet sind. Ausgehend von diesen quasi punktförmigen Stellen wird sich das in den Schaumstoff gedrückte Imprägnat um diese Stellen im Schaumstoff verteilen. Dadurch wird erreicht, dass die jeweils vorgegebene Menge an Imprägnat in den oberflächennahen Bereich des Schaumstoffs gedrückt wird. Durch diese partielle Imprägnierung lassen sich die Eigenschaften des Schaumstoffs in diesem oberflächennahen Bereich gezielt verändern.

Es kann von Vorteil sein, wenn die vorgegebenen voneinander beabstandeten Stellen des Schaumstoffs im Inneren des Schaumstoffs angeordnet sind. Ausgehend von diesen quasi punktförmigen Stellen wird sich das in den Schaumstoff gedrückte Imprägnat um diese Stellen herum in alle Raumrichtungen im Schaumstoff verteilen. Dadurch wird erreicht, dass die jeweils vorgegebene Menge an Imprägnat in einem vorgegebenen innenliegenden Bereich des Schaumstoffs gedrückt wird. Durch diese partielle Imprägnierung lassen sich die Eigenschaften des Schaumstoffs in diesem innenliegenden Bereich gezielt verändern.

Selbstverständlich kann es auch von Vorteil sein, die Stellen derart zu wählen, dass sich sowohl oberflächennahe als auch innenliegende Bereiche des Schaumstoffs, vorzugsweise in einem Arbeitsgang, imprägnieren lassen.

Es kann von Vorteil sein, wenn die Stellen in einer Ebene oder in unterschiedlichen Ebenen des Schaumstoffs angeordnet sind. Auch durch eine derartige partielle Imprägnierung lassen sich die Eigenschaften des Schaumstoffs gezielt verändern.

Es kann von Vorteil sein, wenn die Anordnung der Stellen derart gewählt wird, dass die daraus resultierende partielle Imprägnierung des Schaumstoffs auf den späteren Verwendungszweck des Schaumstoffs, beispielsweise als Fugendichtungsband, hin ausgerichtet ist.

Es kann von Vorteil sein, wenn die an jeder Stelle einzubringende Menge an Imprägnat, die Art des Imprägnats, beispielsweise dessen Zusammensetzung oder dessen Viskosität, und/oder der Druck, mit dem das Imprägnat in den Schaumstoff gedrückt wird, derart gewählt werden, dass die daraus resultierende partielle Imprägnierung des Schaumstoffs auf den späteren Verwendungszweck des Schaumstoffs, beispielsweise als Fugendichtungsband, hin ausgerichtet ist.

Es kann von Vorteil sein, wenn die an jeder Stelle einzubringende Menge an Imprägnat, die Art des Imprägnats, insbesondere dessen Zusammensetzung oder dessen Viskosität, und/oder der Druck, mit dem das Imprägnat in den Schaumstoff gedrückt wird, derart gewählt werden, dass sich das Imprägnat in einem gewollten Ausmaß um die Stelle herum verteilt.

Es kann von Vorteil sein, wenn die Stellen innerhalb vorgesehener Bereiche des Schaumstoffs derart neben- und/oder versetzt übereinander angeordnet werden, dass sich das um eine Stelle herumverteilte Imprägnat mit dem um eine daneben und/oder versetzt darüber angeordnete Stelle herumverteilte Imprägnat überschneidet. Dadurch wird erreicht, dass quasi durchgehende Bereiche oder Schichten des Schaumstoffs imprägniert sind, wobei sich eine partielle Imprägnierung des Schaumstoffs ergibt.

Es kann von Vorteil sein, wenn der Schaumstoff, vorzugsweise als Schaumstoffbahn, unter wenigstens einer drehbaren Walze bzw. Imprägnierwalze oder durch wenigstens einen Walzenspalt, der von zwei gegenüberliegenden, vorzugsweise gegensinnig drehbaren Walzen gebildet wird, fortbewegt wird, wobei wenigstens eine Walze auf ihrer Außenseite Austrittsöffnungen aufweist, die in ihrer Anzahl und Anordnung vorgegeben sind und durch die die vorgegebenen Mengen an Imprägnat gedrückt werden. Wenn der Schaumstoff unter der Walze fortbewegt wird, bietet es sich an, den Schaumstoff auf einem Förderband zu transportieren. Beim Hindurchführen des Schaumstoffs durch den Walzenspalt oder beim Fortbewegen des Schaumstoffs unter der Walze kann es vorteilhaft sein, wenn der Schaumstoff auf ein vorgegebenes Maß zusammengepresst wird. Der jeweilige Walzenspalt oder der Abstand der Walze zum Förderband ist vorzugsweise entsprechend einstellbar.

Für einige Anwendungen kann es vorteilhaft sein, wenn wenigstens eine drehbare Walze bzw. Imprägnierwalze aktiv angetrieben wird. Für andere Anwendungen kann es vorteilhaft sein, wenn keine drehbare Walze bzw. Imprägnierwalze aktiv angetrieben wird, sondern die Rotation der wenigstens einen Walze bzw. Imprägnierwalze durch das Hindurchführen des Schaumstoffs erfolgt.

Es kann von Vorteil sein, wenn mehrere Walzen bzw. Imprägnierwalzen nebeneinander auf einer gemeinsamen Achse und/oder hintereinander auf mehreren Achsen rotieren. Dadurch, dass mehrere Walzen bzw. Imprägnierwalzen nebeneinander auf einer gemeinsamen Achse rotieren, wird erreicht, dass über die Breite des Schaumstoffs gleichzeitig verschiedene Bereiche des Schaumstoffs partiell imprägniert werden können. Dadurch, dass mehrere Walzen bzw. Imprägnierwalzen hintereinander auf mehreren Achsen rotieren, können vorgegebene Bereiche des Schaumstoffs beispielsweise mehrfach, gegebenenfalls mit unterschiedlichen Imprägnaten und/oder in unterschiedlichen Tiefen partiell imprägniert werden.

Vorteilhaft lässt sich der Schaumstoff, vorzugsweise in Form einer Schaumstoffbahn, bei Verwendung wenigstens einer Walze kontinuierlich partiell imprägnieren.

Es kann von Vorteil sein, wenn die vorgegebenen Mengen an Imprägnat durch in Anzahl und Anordnung vorgegebene auf einer Seite eines Körpers angeordnete Austrittsöffnungen gedrückt werden, wobei die Seite des Körpers nach Art eines Stempels auf den Schaumstoff aufgesetzt und/oder beabstandet in vorgegebener Entfernung vom Schaumstoff gehalten wird.

Setzt der Körper auf den Schaumstoff auf, lässt sich dieser je nach ausgeübtem Druck in gewünschter Weise zusammenpressen.

Beim Verwenden eines solchen Körpers wird der Schaumstoff vorzugsweise in einem diskontinuierlichen Verfahren imprägniert. Läuft der Schaumstoff auf einem Förderband, wird dieses für die Taktzeit, in welcher der Körper auf den Schaumstoff aufgesetzt, die vorgegebenen Menge an Imprägnat in den Schaumstoff gedrückt und der Körper anschließend wieder abgehoben wird, angehalten. Bei einem Körper, der beabstandet in vorgegebener Entfernung vom Schaumstoff gehalten wird, verkürzt sich die Taktzeit auf das Einbringen der vorgegebenen Mengen an Imprägnat in den Schaumstoff, da ein Aufsetzen und Abheben des Körpers wegfällt. Denkbar ist aber auch ein kontinuierliches Verfahren, bei dem der Körper während des eigentlichen Imprägniervorganges mit dem sich kontinuierlich bewegenden Schaumstoff mitgeführt wird, um dann rechtzeitig in die Ursprungsposition zurückversetzt zu werden, in der ein weiterer Imprägniervorgang an dem an den bereits imprägnierten Bereich anschließenden Bereich durchgeführt wird.

Gemäß der Erfindung sind die Austrittsöffnungen mit in den Schaumstoff einstechenden Injektionsnadeln gleicher und unterschiedlicher Länge verbnunden. Durch die Injektionsnadeln lassen sich sehr gezielt die vorgegebenen Mengen an Imprägnat an den vorgegebenen voneinander beabstandeten Stellen in den Schaumstoff drücken. Beispielsweise lassen sich gezielt Seitenflächen bzw. Randbereiche eines Schaumstoff imprägnieren. Dadurch, dass gleichzeitig Injektionsnadeln unterschiedlicher Länge verwendet werden, werden die vorgegebenen Mengen an Imprägnat unterschiedlich tief in den Schaumstoff gedrückt, so die Imprägnatverteilung in diesem Bereich homogen ausgebildet sein kann.

Gemäß der Erfindung sind die Austrittsöffnungen mit Düsen verbunden, die auf den Schaumstoff aufsetzen und/oder beabstandet in vorgegebener Entfernung vom Schaumstoff gehalten werden.

Es kann von Vorteil sein, wenn die Injektionsnadeln und/oder die Düsen für einen vorgegebenen Zeitraum mit dem Schaumstoff in Kontakt gebracht werden, wobei das Imprägnat innerhalb dieses Zeitraums an den vorgegebenen voneinander beabstandeten Stellen in den Schaumstoff gedrückt wird.

Es kann von Vorteil sein, wenn das Imprägnat kontinuierlich während des Einbringens der Injektionsnadeln in den Schaumstoff und/oder kontinuierlich während des Herausbringens der Injektionsnadeln aus dem Schaumstoff durch die Injektionsnadeln in den Schaumstoff gedrückt wird.

Es kann von Vorteil sein, wenn jede Austrittsöffnung von der dem Schaumstoff abgewandten Seite bzw. Innenseite der Walze und/oder des Körpers über eine Zuführleitung mit Imprägnat versorgt wird.

Es kann von Vorteil sein, wenn vorgegebenen Gruppen von Austrittsöffnungen gleichzeitig unterschiedliche Imprägnate zugeführt werden.

Es kann von Vorteil sein, wenn der Schaumstoff beim An- bzw. Aufliegen der Walze oder der Körpers komprimiert wird.

Es kann von Vorteil sein, wenn der Schaumstoff, vorzugsweise als Schaumstoffbahn, kontinuierlich oder diskontinuierlich in einer Fertigungslinie bewegt wird, wobei an geeigneter Stelle der Fertigungslinie eine Bearbeitungsstation für das Verfahren zur partiellen Imprägnierung vorgesehen ist. Die Bearbeitungsstation kann beispielsweise derart innerhalb der Fertigungslinie angeordnet sein, dass die in die Bearbeitungsstation laufende Schaumstoffbahn a) nicht vorimprägniert und trocken ist, b) vorimprägniert und nass ist oder c) vorimprägniert und trocken ist.

Es kann von Vorteil sein, wenn sich der Schaumstoff und die wenigstens eine die Austrittsöffnungen aufweisende Walze gegenläufig bewegen.

Es kann von Vorteil sein, wenn als Schaumstoff ein vorimprägnierter Schaumstoff verwendet wird.

Es kann von Vorteil sein, wenn die partielle Imprägnierung von einer Seite des Schaumstoffs ausgehend oder von zwei gegenüberliegenden Seiten des Schaumstoffs ausgehend erfolgt.

Die Erfindung betriff weiterhin ein Fugendichtungsband, das einen Schaumstoff umfasst, der mittels des erfindungsgemäßen Verfahrens nach einem der Ansprüche 1 bis 14 partiell imprägniert ist.

Schließlich betrifft die Erfindung noch eine gemäß Anspruch 13**.**

Es kann von Vorteil sein, wenn die drehbare Hohlwalze im Hohlraum eine feststehende Achse vorzugsweise in Form eines an der Innenseite der Wandung der Hohlwalze dicht anliegenden Zylinders aufweist, wobei der Zylinder wenigstens eine Kammer aufweist, die in einem vorgegebenen zum Schaumstoff ausgerichteten Bereich zur Innenseite der Wandung des drehbaren Hohlwalze offen ist, wobei das in den Schaumstoff einzubringende Imprägnat über eine im Zylinder vorgesehene Zuleitung in die Kammer pumpbar und von dort in Kontakt mit der jeweils an der Kammer vorbei drehbaren Innenseite der Wandung der Hohlwalze bringbar ist, wobei das Imprägnat über auf der Innenseite der Wandung der Hohlwalze vorgesehene Eintrittsöffnungen, die über Durchgangsbohrungen mit den Austrittsöffnungen strömungsverbunden sind, in den Schaumstoff drückbar ist.

Es kann von Vorteil sein, wenn jede Kammer mit bestimmten Austrittsöffnungen strömungsverbunden ist, wobei jede Kammer ein Imprägnat aufweisen kann, dass sich von einem in einer anderen Kammer vorgesehenen Imprägnat unterscheidet.

Es kann von Vorteil sein, wenn die drehbare Hohlwalze im Hohlraum eine mit gleicher Geschwindigkeit wie die Hohlwalze drehbare Achse aufweist, wobei jede auf der Außenseite der Wandung der Hohlwalze vorgesehene Austrittsöffnung über jeweils eine Durchgangsbohrung mit einer auf der Innenseite der Wandung der Hohlwalze vorgesehenen Eintrittsöffnung strömungsverbunden ist, wobei in der drehbaren Achse eine Zuleitung für das in den Schaumstoff drückbare Imprägnat vorgesehen ist, wobei jede Eintrittsöffnung über eine Zuführleitung mit der Zuleitung strömungsverbunden ist, derart, dass nur aus den Austrittsöffnungen, die zum Schaumstoff weisen und/oder über Injektionsnadeln und/oder Düsen direkten Kontakt zum Schaumstoff haben, Imprägnat in den Schaumstoff drückbar ist.

Es kann von Vorteil sein, wenn mehrere Zuleitungen, insbesondere für unterschiedliche Imprägnate, in der Achse vorgesehen sind, die jeweils über Zuführleitungen mit einer Gruppe von Eintrittsöffnungen strömungsverbunden sind.

Es kann von Vorteil sein, wenn eine in der Achse innenliegende Zuleitung im Querschnitt kreis- oder ringförmig ausgebildet ist und weitere in der Achse vorgesehene Zuleitungen konzentrisch jeweils um diese herumgeführt und dabei im Querschnitt ringförmig ausgebildet sind.

Es kann von Vorteil sein, wenn außerhalb der drehbaren Hohlwalze mit der darin angeordneten drehbaren Achse wenigstens ein Vorratsbehälter, der ein Imprägnat enthält, vorgesehen ist, wobei eine Pumpe vorgesehen ist, die das Imprägnat aus dem Vorratsbehälter über eine Versorgungsleitung, die mit der Zuleitung über eine geeignete Kupplung strömungsverbunden ist, in die Zuleitung pumpt.

Es kann von Vorteil sein, wenn die Austrittsöffnungen mit in den Schaumstoff einstechenden, vorzugsweise austauschbaren und/oder verstellbaren Injektionsnadeln gleicher und/oder unterschiedlicher Länge und/oder mit auf den Schaumstoff aufsetzenden und/oder vom Schaumstoff in vorgegebener Entfernung beabstandet gehaltenen und zum Schaumstoff weisenden Düsen ausgebildet sind.

Es kann von Vorteil sein, wenn die Hohlwalze modular aus mehreren Ringen aufgebaut ist, wobei wenigstens ein Ring als Imprägnierring mit Austrittsöffnungen und wenigstens ein Ring als Distanzring ohne Austrittsöffnungen vorgesehen sind, wobei die Ringe je nach gewünschter partieller Imprägnierung anordbar sind.

Es kann von Vorteil sein, wenn verschiedenen Austrittsöffnungen, insbesondere verschiedenen Gruppen von Austrittsöffnungen, zur gleichen Zeit verschiedenartige Imprägnate zuführbar sind.

Es kann von Vorteil sein, wenn die mit den Austrittsöffnungen der Walze verbundenen Injektionsnadeln gegenläufig zur Bewegungsrichtung der Walze ausgerichtet sind, derart, dass das Einbringen des Imprägnats durch die Injektionsnadeln beim Einstechen und Herausziehen der Injektionsnadeln erfolgt. Mit anderen Worten: Das Imprägnat wird durch die Eigenbewegung der mit der Walze verbunden Injektionsnadeln in den Schaumstoff gedrückt. Vorzugsweise wird die Walze hierbei nicht aktiv angetrieben, sondern passiv durch Bewegen des Schaumstoff an der Walze entlang.

Es kann von Vorteil sein, wenn die Austrittsöffnungen in vorgegeben Mustern, insbesondere als Flächen, Schlangenlinien oder dergleichen angeordnet sind.

Weitere vorteilhafte Ausgestaltungen der Erfindung ergeben sich aus der Zeichnung in Zusammenhang mit deren Beschreibung, wobei nachfolgend die Erfindung anhand von Ausführungsbeispielen erläutert wird, die in der Zeichnung dargestellt sind. In dieser zeigen:
- Fig. 1: in schematischer Ansicht einen Ausschnitt aus einer ersten Fertigungslinie mit einer Bearbeitungsstation zur Durchführung eines erfindungsgemäßen Verfahrens,
- Fig. 2: in schematischer Ansicht einen Ausschnitt aus einer zweiten Fertigungslinie mit einer Bearbeitungsstation zur Durchführung eines erfindungsgemäßen Verfahrens,
- Fig. 3: in schematischer Ansicht einen Ausschnitt aus einer dritten Fertigungslinie mit einer Bearbeitungsstation zur Durchführung eines erfindungsgemäßen Verfahrens,
- Fig. 4: in perspektivischer schematischer Ansicht eine Bearbeitungsstation, umfassend eine drehbare Imprägnierwalze zur partiellen Injektion eines Imprägnats in eine Schaumstoffbahn,
- Fig. 5: in perspektivischer schematischer Ansicht eine Bearbeitungsstation, umfassend mehrere drehbare Imprägnierwalzen zur partiellen Injektion eines Imprägnats in eine Schaumstoffbahn,
- Fig. 6: in schematischer Ansicht verschiedene Gruppen unterschiedlich lang ausgebildeter und angeordneter mit den Austrittsöffnungen einer Imprägnierwalze verbundener Injektionsnadeln zum Erreichen verschiedener partieller Imprägnierungen,
- Fig. 7: in perspektivischer schematischer Ansicht eine Bearbeitungsstation, umfassend eine Imprägnierwalze zur partiellen Injektion eines Imprägnats in eine Schaumstoffbahn,
- Fig. 8: eine zur Durchführung eines erfindungsgemäßen Verfahrens vorgesehene erfindungsgemäße Imprägnierwalze zur partiellen Injektion a) in perspektivischer Seitenansicht und b) im Querschnitt,
- Fig. 9: in perspektivischer schematischer Ansicht eine Bearbeitungsstation bei Durchführung eines erfindungsgemäßen Verfahrens zur partiellen Imprägnierung eines Schaumstoffs, umfassend einen Druckbehälter mit Druckdüsen,
- Fig. 10: in perspektivischer schematischer Ansicht eine Bearbeitungsstation bei Durchführung eines erfindungsgemäßen Verfahrens zur partiellen Imprägnierung eines Schaumstoffs, umfassend einen Vorratsbehälter mit Austrittsöffnungen und eine Vakuumvorrichtung,
- Fig. 11: in perspektivischer schematischer Ansicht eine Bearbeitungsstation bei Durchführung eines erfindungsgemäßen Verfahrens zur partiellen Imprägnierung eines Schaumstoffs, umfassend einen Vorratsbehälter mit Austrittsöffnungen sowie mehrere Walzenpaare zur durch Komprimierung bewirkten Einarbeitung eines zuvor partiell in bzw. auf den Schaumstoff ein- bzw. aufgebrachten Imprägnats,
- Fig. 12: in perspektivischer schematischer Ansicht eine Bearbeitungsstation bei Durchführung eines erfindungsgemäßen Verfahrens zur partiellen Imprägnierung einer Schaumstoffbahn, umfassend ein Walzenpaar zur durch Komprimierung bewirkten Einarbeitung eines zuvor partiell in bzw. auf den Schaumstoff ein- bzw. aufgebrachten Imprägnats,
- Fig. 13: in perspektivischer schematischer Ansicht a) eine Anordnung gemäß Fig. 4 und b) schematisch im Querschnitt eine Imprägnierwalze mit partiell imprägnierten und zu imprägnierenden Schaumstoff, wo- bei die Imprägnierwalze den Schaumstoff während der Imprägnierung nicht komprimiert, und
- Fig. 14: in perspektivischer schematischer Ansicht a) eine Anordnung gemäß Fig. 4 und b) schematisch im Querschnitt eine Imprägnierwalze mit partiell imprägnierten und zu imprägnierenden Schaumstoff, wobei die Imprägniermasse den Schaumstoff während der Imprägnierung komprimiert.

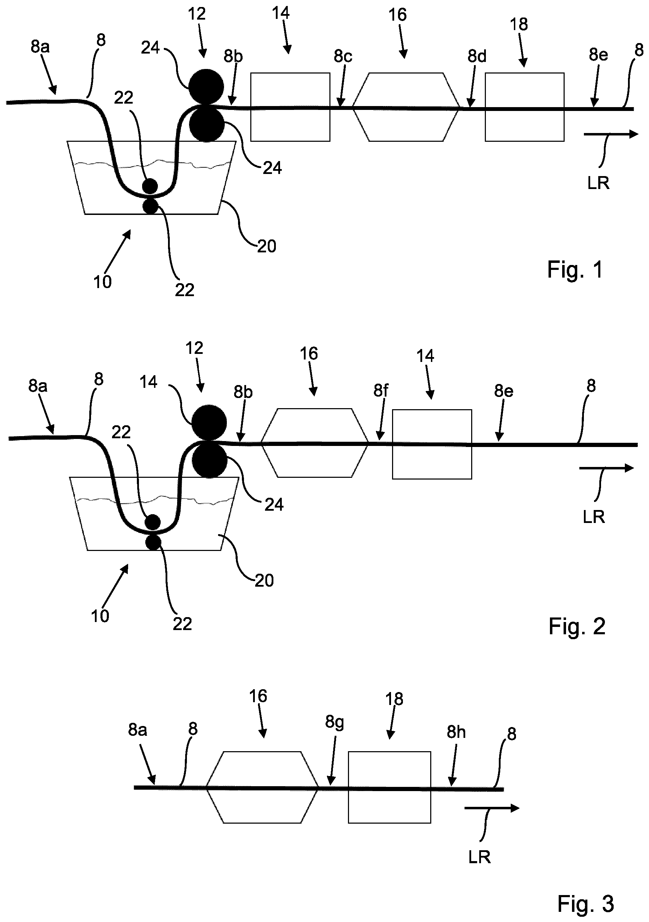

Werden in den Figuren 1 bis 14 gleiche Bezugsziffern verwendet, so bezeichnen diese gleiche Teile, so dass zwecks der Vermeidung von Wiederholungen nicht bei jeder Figurenbeschreibung auf ein bereits beschriebenes Teil erneut eingegangen werden muss.

Das erfindungsmäße Verfahren zum partiellen Imprägnieren eines Schaumstoffs wird vorzugsweise in einer Fertigungslinie durchgeführt, in welcher der Schaumstoff in Form einer Schaumstoffbahn 8 kontinuierlich einzelnen Bearbeitungsstationen 10, 12, 14, 16, 18 zugeführt wird. Die Laufrichtung LR der Schaumstoffbahn ist in den Figuren mit einem Pfeil dargestellt. Die Fertigungslinie kann neben der erfindungsgemäßen Bearbeitungsstation 16 somit auch weitere herkömmliche Bearbeitungsstationen 10, 12, 14, 18 aufweisen, die vor oder hinter der erfindungsgemäßen Bearbeitungsstation 16 anordbar sind. Selbstverständlich ist es auch möglich, mehrere erfindungsgemäße Bearbeitungsstationen 16 in einer Fertigungslinie vorzusehen.

Fig. 1 zeigt in schematischer Ansicht einen Ausschnitt aus einer ersten Fertigungslinie mit einer Bearbeitungsstation 16 zur Durchführung eines erfindungsgemäßen Verfahrens. In dieser Fertigungslinie wird eine Schaumstoffbahn 8 im nicht imprägnierten trockenen Zustand 8a zunächst einer Bearbeitungsstation 10 zugeführt, die ein Tauchbecken 20 aufweist, in dem ein Imprägnat enthalten ist. Die Schaumstoffbahn 8 wird durch das Tauchbecken 20 geführt und dabei in das Imprägnat eingetaucht. Innerhalb des Tauchbeckens 20 sind vorzugsweise Tauch- oder Quetschwalzen 22 vorgesehen, welche die Schaumstoffbahn 8 im Tauchbecken 20 zusammenpressen, wodurch das Imprägnat in die Poren der im Tauchbecken 20 befindlichen Schaumstoffbahn 8 eindringt und diese dort vollständig durchdringt. Die Schaumstoffbahn 8 wird dadurch homogen mit Imprägnat imprägniert. Anschließend wird die so homogen imprägnierte Schaumstoffbahn 8 aus dem Tauchbecken 20 bewegt und vorteilhaft einer Bearbeitungsstation 12 zugeführt, die zwei gegenüberliegende gegensinnig rotierende Abquetschwalzen 24 aufweist, wobei die Schaumstoffbahn 8 durch einen zwischen den beiden Abquetschwalzen 24 gebildeten Walzenspalt geführt wird. Mittels dieser Walzen 24 wird ein Teil des Imprägnats aus der Schaumstoffbahn 8 bis zu einem gewünschten Imprägnierungsgrad aus- bzw. abgequetscht. Die Schaumstoffbahn 8 ist nach Verlassen dieser Bearbeitungsstation 12 in einem imprägnierten nassen Zustand 8b.

Anschließend wird die Schaumstoffbahn 8 in einer Bearbeitungsstation 14, insbesondere in einem Trocknungsofen, getrocknet. Die Schaumstoffbahn 8 ist nach Verlassen dieser Bearbeitungsstation 14 in einem imprägnierten trockenen Zustand 8c.

Danach wird die Schaumstoffbahn 8 einer Bearbeitungsstation 16 zugeführt, in welcher erfindungsgemäß an vorgegebenen voneinander beabstandeten Stellen der die Bearbeitungsstation 16 kontinuierlich durchlaufenden Schaumstoffbahn 8 jeweils eine vorgegebene Menge an Imprägnat in die Schaumstoffbahn 8 gedrückt wird. Die Schaumstoffbahn 8 ist nach Verlassen dieser Bearbeitungsstation 16 in Bezug auf die vorgenommene partielle Imprägnierung in einem nassen Zustand 8d.

Schließlich wird die Schaumstoffbahn 8 in einer Bearbeitungsstation 18, insbesondere in einem Trocknungsofen, erneut getrocknet. Die Schaumstoffbahn 8 ist nach Verlassen dieser Bearbeitungsstation 18 insbesondere in Bezug auf die vorgenommene partielle Imprägnierung in einem trockenen Zustand 8e.

Fig. 2 zeigt in schematischer Ansicht einen Ausschnitt aus einer zweiten Fertigungslinie mit einer Bearbeitungsstation 16 zur Durchführung eines erfindungsgemäßen Verfahrens. In dieser Fertigungslinie wird eine Schaumstoffbahn 8 im nicht imprägnierten trockenen Zustand 8a zunächst einer Bearbeitungsstation 10 zugeführt, die ein Tauchbecken 20 aufweist, in dem ein Imprägnat enthalten ist. Die Schaumstoffbahn 8 wird durch das Tauchbecken 20 geführt und dabei in das Imprägnat eingetaucht. Innerhalb des Tauchbeckens 20 sind vorzugsweise Tauch- oder Quetschwalzen 22 vorgesehen, welche die Schaumstoffbahn 8 im Tauchbecken 20 zusammenpressen, wodurch das Imprägnat in die Poren der im Tauchbecken 20 befindlichen Schaumstoffbahn 8 eindringt und diese dort vollständig durchdringt. Die Schaumstoffbahn 8 wird dadurch homogen mit Imprägnat imprägniert. Anschließend wird die so homogen imprägnierte Schaumstoffbahn 8 aus dem Tauchbecken 20 bewegt und vorteilhaft einer Bearbeitungsstation 12 zugeführt, die zwei gegenüberliegende gegensinnig rotierende Abquetschwalzen 24 aufweist, wobei die Schaumstoffbahn 8 durch einen zwischen den beiden Abquetschwalzen 24 gebildeten Walzenspalt geführt wird. Mittels dieser Abquetschwalzen 24 wird ein Teil des Imprägnats aus der Schaumstoffbahn 8 bis zu einem gewünschten Imprägnierungsgrad aus- bzw. abgequetscht. Die Schaumstoffbahn 8 ist nach Verlassen dieser Bearbeitungsstation 12 in einem imprägnierten nassen Zustand 8b.

Danach wird die Schaumstoffbahn 8 einer Bearbeitungsstation 16 zugeführt, in welcher erfindungsgemäß an vorgegebenen voneinander beabstandeten Stellen der die Bearbeitungsstation 16 kontinuierlich durchlaufenden Schaumstoffbahn 8 jeweils eine vorgegebene Menge an Imprägnat in die Schaumstoffbahn 8 gedrückt wird. Die Schaumstoffbahn 8 ist nach Verlassen dieser Bearbeitungsstation 16 in einem homogen imprägnierten und zusätzlich partiell imprägnierten nassen Zustand 8f.

Schließlich wird die Schaumstoffbahn 8 in einer Bearbeitungsstation 14, insbesondere in einem Trocknungsofen, getrocknet. Die Schaumstoffbahn 8 ist nach Verlassen dieser Bearbeitungsstation 14 in einem homogen imprägnierten und zusätzlich partiell imprägnierten trockenen Zustand 8e.

Fig. 3 zeigt in schematischer Ansicht einen Ausschnitt aus einer ersten Fertigungslinie mit einer Bearbeitungsstation 16 zur Durchführung eines erfindungsgemäßen Verfahrens. In dieser Fertigungslinie wird eine Schaumstoffbahn 8 im nicht imprägnierten trockenen Zustand 8a direkt einer Bearbeitungsstation 16 zugeführt, in welcher erfindungsgemäß an vorgegebenen voneinander beabstandeten Stellen der die Bearbeitungsstation 16 kontinuierlich durchlaufenden Schaumstoffbahn 8 jeweils eine vorgegebene Menge an Imprägnat in die Schaumstoffbahn 8 gedrückt wird. Die Schaumstoffbahn 8 ist nach Verlassen dieser Bearbeitungsstation 16 in Bezug auf die vorgenommene partielle Imprägnierung in einem nassen Zustand 8g.

Abschließend wird die Schaumstoffbahn 8 in einer Bearbeitungsstation 18, insbesondere in einem Trocknungsofen, getrocknet. Die Schaumstoffbahn 8 ist nach Verlassen dieser Bearbeitungsstation 18 in einem partiell imprägnierten trockenen Zustand 8h.

Weitere hier in den Fig. 1 bis 3 nicht dargestellte Bearbeitungsstationen können das Aufwickeln der Schaumstoffbahn 8 zu einer Rolle und/oder das Schneiden der Schaumstoffbahn 8 zur weiteren Verwendung, beispielsweise als Fugendichtungsband, betreffen.

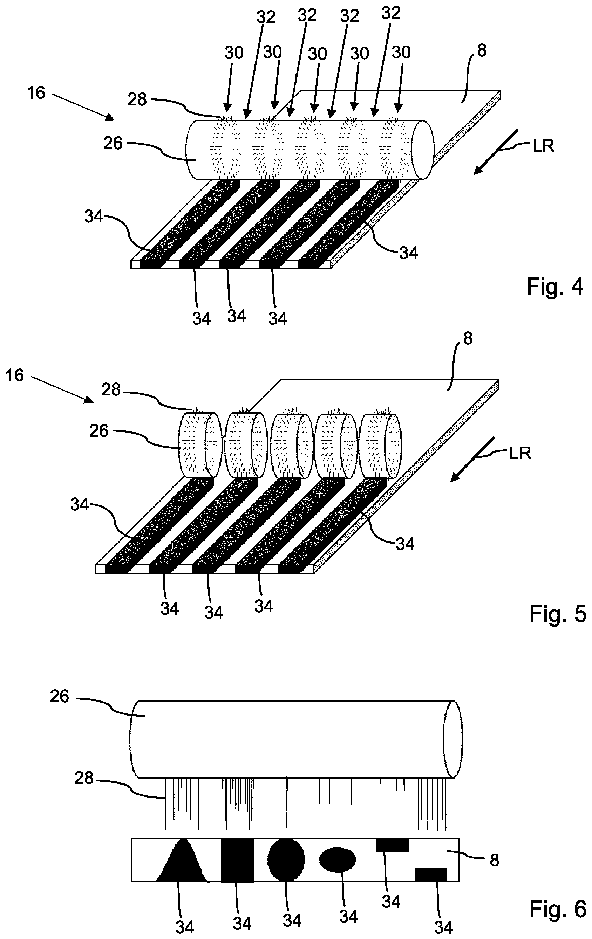

Fig. 4 zeigt in perspektivischer schematischer Ansicht eine Bearbeitungsstation 16, umfassend eine drehbare Imprägnierwalze 26 zur partiellen Injektion eines Imprägnats in eine Schaumstoffbahn 8 während der Imprägnierung.

Die Imprägnierwalze 26 ist Teil einer Bearbeitungsstation 16, deren mögliche Anordnung innerhalb einer Fertigungslinie bereits mit Bezug auf die Fig. 1 bis 3 beschrieben worden ist. Somit kann sich die Schaumstoffbahn 8, die die Bearbeitungsstation 16 durchläuft, in den entsprechenden bereits mit Bezug auf die Fig. 1 bis 3 beschriebenen Zuständen 8a, 8b oder 8c befinden. Nach der partiellen Imprägnierung und abschließenden Trocknung liegt die Schaumstoffbahn 8 dann in den bereits mit Bezug auf die Fig. 1 bis 3 beschriebenen Zuständen 8d, 8f oder 8g vor.

Die Bearbeitungsstation 16 zur Durchführung eines Verfahrens zur partiellen Imprägnierung einer Schaumstoffbahn 8 sieht gemäß Fig. 4 eine drehbare Imprägnierwalze 26 vor, die auf ihrer Außenseite in Anzahl und Anordnung vorgegebene Austrittsöffnungen aufweist, wobei aus diesen beim Überrollen der Oberfläche der Schaumstoffbahn 8 vorgegebene Mengen an Imprägnat in die Schaumstoffbahn 8 gedrückt werden.

Die Austrittsöffnungen sind vorliegend mit in die Schaumstoffbahn 8 einstechenden Injektionsnadeln 28 ausgebildet.

Zusätzlich oder alternativ können die Austrittsöffnungen auch mit auf die Schaumstoffbahn 8 aufsetzenden und/oder mit von der Schaumstoffbahn 8 in vorgegebener Entfernung beabstandet gehaltenen und zur Schaumstoffbahn 8 weisenden Düsen ausgebildet sein. Bei den Düsen kann es sich vorteilhaft um Druckdüsen handeln, wie sie aus der Drucktechnik bekannt sind, so dass das Imprägnat beispielsweise im so genannten Drop-On-Demand-Verfahren, bei dem ein Piezo-Element die Druckdüse kurzzeitig verformt, mit hoher Geschwindigkeit auf und in die Schaumstoffbahn 8 gebracht wird. Es kann sich bei den Düsen aber auch um Druckdüsen handeln, die mit Druckluft beaufschlagt werden, um das Imprägnat aus den Düsen auf und in die Schaumstoffbahn 8 zu drücken.

Die Imprägnierwalze 26 kann modular aus mehreren Ringen 30, 32 aufgebaut sein, wobei vorliegende fünf Ringe als Imprägnierringe 30 mit den vorgenannten Injektionsnadeln 28 und die übrigen Ringe als Distanzringe 32 ohne Austrittsöffnungen vorgesehen sind. Injektionsnadeln der Imprägnierringe 30 sind um den kompletten Umfang verteilt, so dass sich eine partielle Imprägnierung der Schaumstoffbahn in Form von mehreren nebeneinander angeordneten und voneinander beabstandeten, in Längsrichtung verlaufenden das Imprägnat aufweisenden Streifen 34 ergibt.

Fig. 5 zeigt in perspektivischer schematischer Ansicht eine Bearbeitungsstation 16, umfassend mehrere voneinander beabstandete Imprägnierwalzen 26 zur partiellen Injektion eines Imprägnats in eine Schaumstoffbahn 8 während der Imprägnierung.

Die voneinander beabstandeten und nebeneinander angeordneten Imprägnierwalzen 26 sind Teil einer Bearbeitungsstation 16, deren mögliche Anordnung innerhalb einer Fertigungslinie bereits zuvor beschrieben worden ist.

Die Bearbeitungsstation 16 zur Durchführung eines Verfahrens zur partiellen Imprägnierung einer Schaumstoffbahn 8 sieht gemäß Fig. 5 mehrere drehbare Imprägnierwalzen 26 vor, die auf ihrer Außenseite Austrittsöffnungen aufweist, wobei aus diesen beim Überrollen der Oberfläche der Schaumstoffbahn 8 vorgegebene Mengen an Imprägnat in die Schaumstoffbahn 8 gedrückt werden.

Die Austrittsöffnungen sind vorliegend mit in die Schaumstoffbahn 8 einstechenden Injektionsnadeln 28 ausgebildet.

Zusätzlich oder alternativ können die Austrittsöffnungen auch - wie zuvor beschrieben - mit auf die Schaumstoffbahn 8 aufsetzenden und/oder mit von der Schaumstoffbahn 8 in vorgegebener Entfernung beabstandet gehaltenen und zur Schaumstoffbahn 8 weisenden Düsen ausgebildet sein.

Die Injektionsnadeln 28 der Imprägnierwalzen 26 sind um den kompletten Umfang verteilt, so dass sich eine partielle Imprägnierung der Schaumstoffbahn 8 in Form von mehreren nebeneinander angeordneten und voneinander beabstandeten, in Längsrichtung verlaufenden das Imprägnat aufweisenden Streifen 34 ergibt.

Fig. 6 zeigt in schematischer Ansicht verschiedene Gruppen 36 unterschiedlich lang ausgebildeter und unterschiedlich angeordneter mit den Austrittsöffnungen einer Imprägnierwalze 26 verbundener Injektionsnadeln 28 zum Erreichen verschiedener partieller Imprägnierungen. Vorliegend sind sechs unterschiedliche Gruppen 36 beispielhaft gezeigt. Zu jeder Gruppe 36 ist die damit einhergehende partielle Imprägnierung dargestellt. Diese können - wie in den Fig. 4 und 5 dargestellt - als Streifen 34, aber - wie in der vorliegenden Fig. 6 gezeigt - mit einer unterschiedlichen Profilierung und/oder in unterschiedlichen Ebenen innerhalb der Schaumstoffbahn 8 vorliegen. Selbstverständlich sind die Möglichkeiten der Profilierung und Anordnung der das Imprägnat aufweisen Streifen 34 vielfältig und nicht auf die in Fig. 6 dargestellten Beispiele beschränkt. Vorzugsweise wird eine Bearbeitungsstation 16 eine oder mehrere Imprägnierwalzen 26 mit jeweils gleich ausgebildeten Gruppen 36 von Injektionsnadeln 28 aufweisen. Es kann auch zweckmäßig sein, wenn eine Bearbeitungsstation 16 eine oder mehrere Imprägnierwalzen 26 mit zumindest zwei unterschiedlich ausgebildeten Gruppen 36 von Injektionsnadeln 28 aufweist.

Bei dem Verfahren zum partiellen Imprägnieren der Schaumstoffbahn 8 wird somit über die Injektionsnadeln 28 an vorgegebenen voneinander beabstandeten Stellen de Schaumstoffbahn 8 jeweils eine vorgegebene Menge an Imprägnat in den Schaumstoff gedrückt. Bei Verwendung von Injektionsnadeln 28 sind die Stellen im Inneren des Schaumstoffs angeordnet, wobei die Stellen - je nach Länge der Injektionsnadeln - in einer Ebene oder in unterschiedlichen Ebenen des Schaumstoffs angeordnet sein können.

Die Art der partiellen Imprägnierung kann nicht nur abhängig von der Anordnung und Länge der in die Schaumstoffbahn 8 einstechenden Injektionsnadeln 28 sein. Einfluss auf die Art der partiellen Imprägnierung hat auch die an jeder Stelle einzubringende Menge an Imprägnat, die Art des Imprägnats, beispielsweise dessen Zusammensetzung oder dessen Viskosität, und/oder der Druck, mit dem das Imprägnat in den Schaumstoff gedrückt wird. Insbesondere ist von diesen Parametern auch abhängig, in welchem Ausmaß das Imprägnat um die Stelle herum verteilt. Insbesondere sind Stellen innerhalb vorgesehener Bereiche des Schaumstoffs derart neben- und/oder versetzt übereinander angeordnet werden, dass sich das um eine Stelle herumverteilte Imprägnat mit dem um eine daneben und/oder versetzt darüber angeordnete Stelle herumverteilte Imprägnat überschneidet.

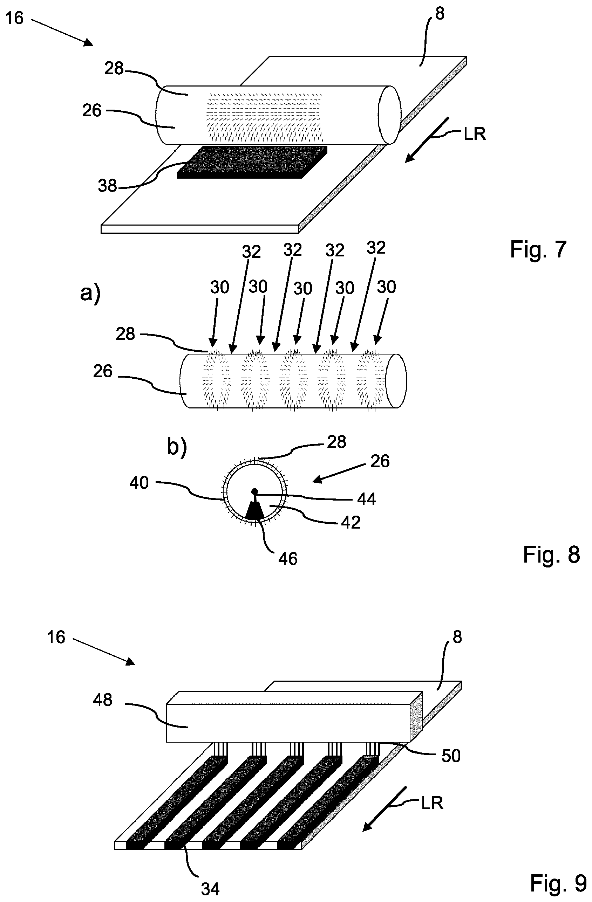

Fig. 7 zeigt in perspektivischer schematischer Ansicht eine Bearbeitungsstation 16, umfassend eine Imprägnierwalze 26 zur partiellen Injektion eines Imprägnats in eine Schaumstoffbahn 8 während der Imprägnierung.

Die Imprägnierwalze 26 ist Teil einer Bearbeitungsstation 16, deren mögliche Anordnung innerhalb einer Fertigungslinie bereits zuvor beschrieben worden ist.

Die Bearbeitungsstation 16 zur partiellen Imprägnierung einer Schaumstoffbahn 8 sieht gemäß Fig. 7 eine drehbare Imprägnierwalze 26 vor, die auf ihrer Außenseite Austrittsöffnungen aufweist, wobei aus diesen beim Überrollen der Oberfläche der Schaumstoffbahn 8 vorgegebene Mengen an Imprägnat in die Schaumstoffbahn 8 gedrückt werden.

Die Austrittsöffnungen sind vorliegend mit in die Schaumstoffbahn 8 einstechenden Injektionsnadeln 28 ausgebildet.

Zusätzlich oder alternativ können die Austrittsöffnungen auch - wie zuvor beschrieben - mit auf die Schaumstoffbahn 8 aufsetzenden und/oder mit von der Schaumstoffbahn 8 in vorgegebener Entfernung beabstandet gehaltenen und zur Schaumstoffbahn 8 weisenden Düsen ausgebildet sein.

Die Injektionsnadeln 28 der Imprägnierwalze 26 sind vorliegend allerdings nicht um den kompletten Umfang der Imprägnierwalze 26 verteilt, sondern befinden sich in einen vorgegebenen rechteckförmig begrenzten Bereich, so dass sich eine partielle Imprägnierung der Schaumstoffbahn 8 in Form von mehreren hintereinander angeordneten und voneinander beabstandeten, in Längsrichtung angeordneten das Imprägnat aufweisenden Feldern 38 ergibt. Vorliegend ist nur ein Feld 38 dargestellt.

Fig. 8 zeigt eine zur Durchführung eines erfindungsgemäßen Verfahrens vorgesehene erfindungsgemäße Imprägnierwalze zur partiellen Injektion a) in perspektivischer Seitenansicht und b) im Querschnitt.

Es handelt sich hierbei um die bereits in Fig. 4 dargestellte Imprägnierwalze 26. Wie gut im Querschnitt zu erkennen ist, handelt es sich hierbei um eine drehbare Hohlwalze 40 auf, die auf ihrer Außenseite Austrittsöffnungen aufweist, wobei aus diesen beim Überrollen der Oberfläche einer Schaumstoffbahn vorgegebene Mengen an Imprägnat in die Schaumstoffbahn drückbar sind. Die drehbare Hohlwalze 40 weist im Hohlraum eine feststehende Achse in Form eines an der Innenseite der Wandung der Hohlwalze 40 dicht anliegenden Zylinders 42 auf. Der Zylinder 42 weist eine Kammer 44 auf, die in einem zur Schaumstoffbahn 8 ausgerichteten Bereich zur Innenseite der Wandung der drehbaren Hohlwalze 40 offen ist. Das in die Schaumstoffbahn 8 einzubringende Imprägnat ist vorzugsweise über eine im Zylinder 42 vorgesehene Zuleitung 44 in die Kammer 46 pumpbar, wo es in Kontakt mit der jeweils an der Kammer 46 vorbei drehbaren Innenseite der Wandung der Hohlwalze 40 steht. Das Imprägnat ist über auf der Innenseite der Wandung der Hohlwalze 40 vorgesehene Eintrittsöffnungen, die über Durchgangsbohrungen mit den Austrittsöffnungen strömungsverbunden sind, in die Schaumstoffbahn 8 drückbar. Die Austrittsöffnungen wiederum sind hierzu mit in die Schaumstoffbahn 8 einstechenden, voneinander beabstandeten Injektionsnadeln 28 ausgebildet.

Fig. 9 zeigt in perspektivischer schematischer Ansicht eine Bearbeitungsstation 16 zur Durchführung eines Verfahrens zur partiellen Imprägnierung eines Schaumstoffs, welche einen Körper in Form eines ein Imprägnat enthaltenen Druckbehälters 46 umfasst, der auf einer Seite Austrittsöffnungen in Form von Druckdüsen 50 aufweist, wobei aus diesen 50 nach dem Aufsetzen der Seite auf die Schaumstoffbahn 8 bzw. nach dem Halten der Seite beabstandet in vorgegebener Entfernung von der Schaumstoffbahn 8 und zur Schaumstoffbahn 8 weisend vorgegebene Mengen an Imprägnat in den Schaumstoff drückbar sind. Bei den Druckdüsen 50 kann es sich vorteilhaft um solche handeln, wie sie aus der Drucktechnik bekannt sind, so dass das Imprägnat beispielsweise im so genannten Drop-On-Demand-Verfahren, bei dem ein Piezo-Element die Druckdüse kurzzeitig verformt, mit hoher Geschwindigkeit auf und in die Schaumstoffbahn 8 gebracht wird. Es kann sich bei den Düsen aber auch um Druckdüsen handeln, die mit Druckluft beaufschlagt werden, um das Imprägnat aus den Düsen auf und in die Schaumstoffbahn 8 zu drücken.

Mögliche Anordnungen der Bearbeitungsstation 16 innerhalb einer Fertigungslinie sind bereits zuvor beschrieben worden.

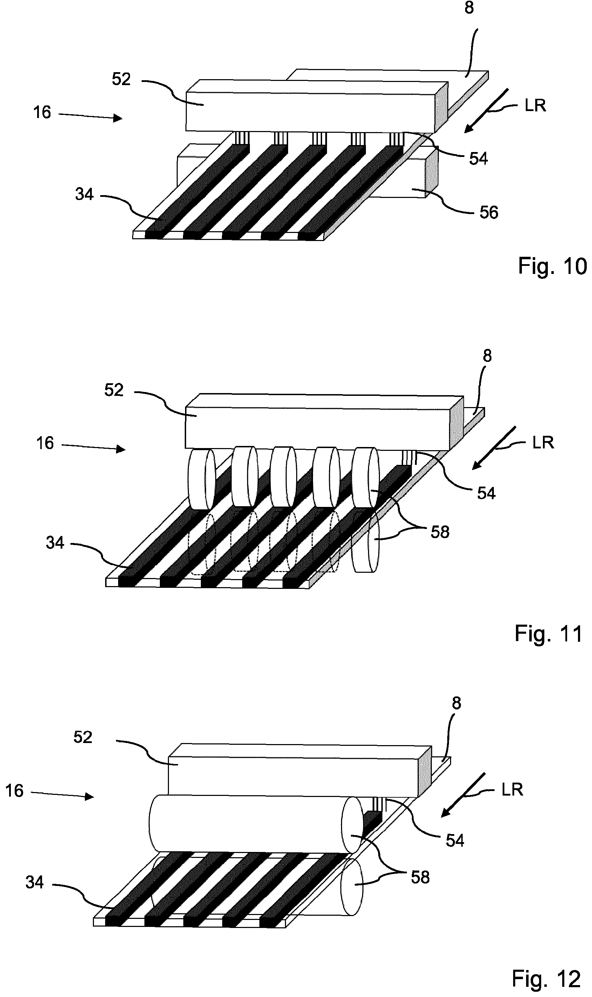

Fig. 10 zeigt in perspektivischer schematischer Ansicht eine Bearbeitungsstation 16 zur Durchführung eines Verfahrens zur partiellen Imprägnierung einer Schaumstoffbahn 8, welche einen ein Imprägnat enthaltenen Vorratsbehälter 52 umfasst, der auf einer Seite Austrittsöffnungen 54 aufweist, wobei aus diesen 54 nach dem Aufsetzen der Seite auf die Schaumstoffbahn 8 vorgegebene Mengen an Imprägnat auf die Schaumstoffbahn 8 gebracht werden, die dann mittels einer auf der anderen Seite der Schaumstoffbahn 8 angeordneten Vakuumvorrichtung 56 mittels Vakuum in den Schaumstoff gesogen wird. Selbstverständlich ist der Schaumstoff hierzu zumindest teilweise offenzellig ausgebildet.

Mögliche Anordnungen der Bearbeitungsstation 16 innerhalb einer Fertigungslinie sind bereits zuvor beschrieben worden.

Fig. 11 zeigt in perspektivischer schematischer Ansicht eine Bearbeitungsstation 16 zur Durchführung eines Verfahrens zur partiellen Imprägnierung einer Schaumstoffbahn 8, welche einen ein Imprägnat enthaltenen Vorratsbehälter 52 umfasst, der auf einer Seite in vorgegebener Anordnung Austrittsöffnungen 54 aufweist, wobei aus diesen 54 nach dem Aufsetzen der Seite auf die Schaumstoffbahn 8 vorgegebene Mengen an Imprägnat partiell auf die Schaumstoffbahn 8 gebracht werden. Das partiell aufgebrachte Imprägnat wird dann mittels mehrerer nebeneinander angeordneter und voneinander beabstandeter Walzenpaare 58 partiell in die Schaumstoffbahn 8 eingearbeitet. Dazu durchläuft die Schaumstoffbahn 8 den zwischen den Walzenpaaren ausgebildeten Walzenspalt, wobei die das Imprägnat an der Oberfläche aufweisende Schaumstoffbahn 8 komprimiert wird. Beim Komprimieren wird das an der Oberfläche der Schaumstoffbahn 8 vorliegenden Imprägnat zumindest teilweise in die Schaumstoffbahn 8 eingearbeitet bzw. mittels der Walzen in die Schaumstoffbahn 8 gedrückt. Beim anschließenden Expandieren der Schaumstoffbahn 8 wird das an der Oberfläche der Schaumstoffbahn 8 noch vorhandene Imprägnat bzw. das bereits zumindest teilweise in die Schaumstoffbahn 8 eingearbeitete Imprägnat weiter in die Schaumstoffbahn eingesaugt.

Mögliche Anordnungen der Bearbeitungsstation 16 innerhalb einer Fertigungslinie sind bereits zuvor beschrieben worden.

Fig. 12 zeigt in perspektivischer schematischer Ansicht eine Bearbeitungsstation 16 zur Durchführung eines Verfahrens zur partiellen Imprägnierung einer Schaumstoffbahn 8, welche einen ein Imprägnat enthaltenen Vorratsbehälter 52 umfasst, der auf einer Seite in vorgegebener Anordnung Austrittsöffnungen 54 aufweist, wobei aus diesen 54 nach dem Aufsetzen der Seite auf die Schaumstoffbahn 8 vorgegebene Mengen an Imprägnat partiell auf die Schaumstoffbahn 8 gebracht werden. Das partiell aufgebrachte Imprägnat wird dann mittels eines die Schaumstoffbahn 8 in Querrichtung überspannenden Walzenpaares 58 partiell in die Schaumstoffbahn 8 eingearbeitet. Dazu durchläuft die Schaumstoffbahn 8 den zwischen dem Walzenpaar ausgebildeten Walzenspalt, wobei die das Imprägnat an der Oberfläche aufweisende Schaumstoffbahn 8 komprimiert wird. Beim Komprimieren wird das an der Oberfläche der Schaumstoffbahn 8 vorliegende Imprägnat zumindest teilweise in die Schaumstoffbahn 8 eingearbeitet bzw. mittels der Walzen in die Schaumstoffbahn 8 gedrückt. Beim anschließenden Expandieren der Schaumstoffbahn 8 wird das an der Oberfläche der Schaumstoffbahn 8 noch vorhandene Imprägnat bzw. das bereits zumindest teilweise in die Schaumstoffbahn 8 eingearbeitete Imprägnat weiter in die Schaumstoffbahn eingesaugt.

Mögliche Anordnungen der Bearbeitungsstation 16 innerhalb einer Fertigungslinie sind bereits zuvor beschrieben worden.

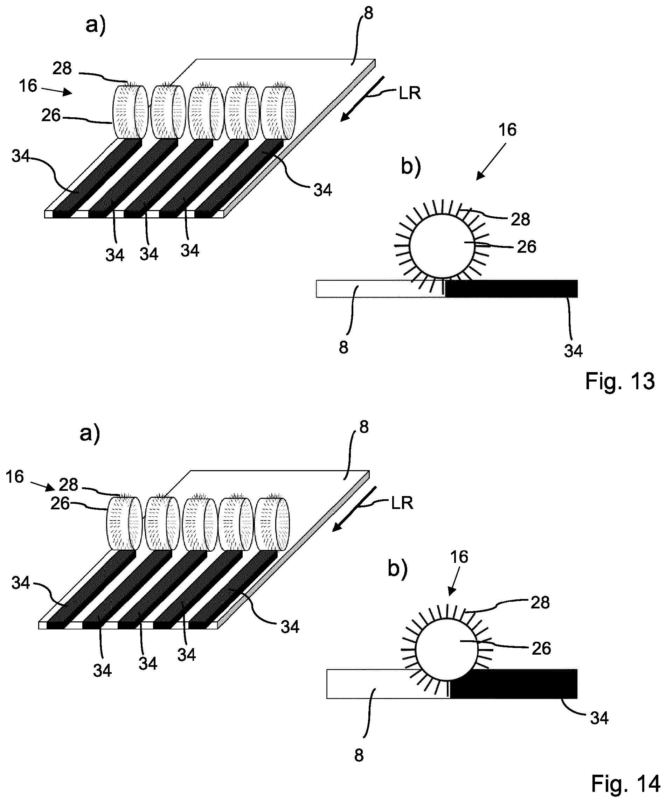

Fig. 13 zeigt in perspektivischer schematischer Ansicht a) eine Anordnung gemäß Fig. 4, und b) schematisch im Querschnitt eine Imprägnierwalze 26 mit partiell imprägnierten und zu imprägnierenden Schaumstoff, wobei die Imprägnierwalze 26 den Schaumstoff während der Imprägnierung nicht komprimiert.

Fig. 14 zeigt in perspektivischer schematischer Ansicht a) eine Anordnung gemäß Fig. 4 und b) schematisch im Querschnitt eine Imprägnierwalze 26 mit partiell imprägnierten und zu imprägnierenden Schaumstoff, wobei die Imprägnierwalze 26 den Schaumstoff während der Imprägnierung komprimiert.

### Bezugszeichenliste

- 8: Schaumstoffbahn
- 8a: Schaumstoffbahn (nicht imprägniert, trocken)
- 8b: Schaumstoffbahn (imprägniert, nass)
- 8c: Schaumstoffbahn (imprägniert, trocken)
- 8d: Schaumstoffbahn (zusätzlich partiell imprägniert, nass)
- 8e: Schaumstoffbahn (zusätzlich partiell imprägniert, trocken)
- 8f: Schaumstoffbahn (imprägniert, nass + zusätzlich partiell imprägniert, nass)
- 8g: Schaumstoffbahn (nur partiell imprägniert, nass)
- 8h: Schaumstoffbahn (nur partiell imprägniert, trocken)
- 10: Bearbeitungsstation
- 12: Bearbeitungsstation
- 14: Bearbeitungsstation
- 16: Bearbeitungsstation
- 18: Bearbeitungsstation
- 20: Tauchbecken
- 22: Tauch- oder Quetschwalzen
- 24: Walze
- 26: Imprägnierwalze
- 28: Injektionsnadeln
- 30: Imprägnierring
- 32: Distanzring
- 34: Streifen
- 36: Gruppe
- 38: Feld
- 40: Hohlwalze
- 42: Zylinder
- 44: Zuleitung
- 46: Kammer
- 48: Druckbehälter mit Imprägnat
- 50: Druckdüsen
- 52: Vorratsbehälter
- 54: Austrittsöffnungen
- 56: Vakuumvorrichtung
- 58: Walzenpaar
- LR: Laufrichtung

## Patentansprüche

1. Verfahren zum partiellen Imprägnieren eines Schaumstoffs eines Fugendichtungsbandes, bei welchem an vorgegebenen voneinander beabstandeten Stellen des Schaumstoffs jeweils eine vorgegebene Menge an Imprägnat in den Schaumstoff gedrückt wird.

2. Verfahren nach Anspruch 1, **dadurch gekennzeichnet, dass** die Stellen auf der Oberfläche des Schaumstoffs angeordnet sind
und/oder
dass die Stellen im Inneren des Schaumstoffs angeordnet sind
und/oder
dass die Stellen in einer Ebene oder in unterschiedlichen Ebenen des Schaumstoffs angeordnet sind.

3. Verfahren nach wenigstens einem der vorherigen Ansprüche, **dadurch gekennzeichnet, dass** die an jeder Stelle einzubringende Menge an Imprägnat, die Art des Imprägnats, insbesondere dessen Zusammensetzung oder dessen Viskosität, und/oder der Druck, mit dem das Imprägnat in den Schaumstoff gedrückt wird, derart gewählt werden, dass sich das Imprägnat in einem gewollten Ausmaß um die Stelle herum verteilt.

4. Verfahren nach wenigstens einem der vorherigen Ansprüche, **dadurch gekennzeichnet, dass** die Stellen innerhalb vorgesehener Bereiche des Schaumstoffs derart neben- und/oder versetzt übereinander angeordnet werden, dass sich das um eine Stelle herumverteilte Imprägnat mit dem um eine daneben und/oder versetzt darüber angeordnete Stelle herumverteilte Imprägnat überschneidet.

5. Verfahren nach wenigstens einem der vorherigen Ansprüche, **dadurch gekennzeichnet, dass** der Schaumstoff, vorzugsweise als Schaumstoffbahn (8), unter wenigstens einer drehbaren Walze bzw. Imprägnierwalze (26) oder durch wenigstens einen Walzenspalt, der von zwei gegenüberliegenden, vorzugsweise gegensinnig drehbaren Walzen gebildet wird, fortbewegt wird, wobei wenigstens eine Walze auf ihrer Außenseite Austrittsöffnungen aufweist, die in ihrer Anzahl und Anordnung vorgegeben sind und durch die die vorgegebenen Mengen an Imprägnat gedrückt werden.

6. Verfahren nach wenigstens einem der vorherigen Ansprüche, **dadurch gekennzeichnet, dass** mehrere Walzen nebeneinander auf einer gemeinsamen Achse und/oder hintereinander auf mehreren Achsen rotieren.

7. Verfahren nach wenigstens einem der vorherigen Ansprüche, **dadurch gekennzeichnet, dass** die vorgegebenen Mengen an Imprägnat durch in Anzahl und Anordnung vorgegebene auf einer Seite eines Körpers, beispielsweise eines Druckbehälters (48) oder Vorratsbehälters (52), angeordnete Austrittsöffnungen (54) gedrückt werden, wobei die Seite des Körpers nach Art eines Stempels auf den Schaumstoff aufgesetzt und/oder beabstandet in vorgegebener Entfernung vom Schaumstoff gehalten wird.

8. Verfahren nach wenigstens einem der vorherigen Ansprüche, **dadurch gekennzeichnet, dass** die Austrittsöffnungen mit in den Schaumstoff einstechenden Injektionsnadeln (28) gleicher und/oder unterschiedlicher Länge verbunden sind
und/oder
dass die Austrittsöffnungen mit Düsen (50) verbunden sind, die auf den Schaumstoff aufsetzen und/oder beabstandet in vorgegebener Entfernung vom Schaumstoff gehalten werden.

9. Verfahren nach wenigstens einem der vorherigen Ansprüche, **dadurch gekennzeichnet, dass** die Injektionsnadeln (28) und/oder die Düsen (50) für einen vorgegebenen Zeitraum mit dem Schaumstoff in Kontakt gebracht werden, wobei das Imprägnat innerhalb dieses Zeitraums an den vorgegebenen voneinander beabstandeten Stellen in den Schaumstoff gedrückt wird.

10. Verfahren nach wenigstens einem der vorherigen Ansprüche, **dadurch gekennzeichnet, dass** vorgegebenen Gruppen (36) von Austrittsöffnungen gleichzeitig unterschiedliche Imprägnate zugeführt werden.

11. Verfahren nach wenigstens einem der vorherigen Ansprüche, **dadurch gekennzeichnet, dass** der Schaumstoff beim An- bzw. Aufliegen der Walze oder des Körpers komprimiert wird.

12. Verfahren nach wenigstens einem der vorherigen Ansprüche, **dadurch gekennzeichnet, dass** der Schaumstoff, vorzugsweise als Schaumstoffbahn (8), kontinuierlich oder diskontinuierlich in einer Fertigungslinie bewegt wird, wobei an geeigneter Stelle der Fertigungslinie eine Bearbeitungsstation (16) für das Verfahren zur partiellen Imprägnierung vorgesehen ist.

13. Bearbeitungsstation zur Durchführung eines Verfahrens zur partiellen Imprägnierung eines Schaumstoffs nach einem der Ansprüche 1 bis 12, bei welcher wenigstens eine drehbare Walze bzw. Imprägnierwalze (26), vorzugsweise eine Hohlwalze (40), vorgesehen ist, die auf ihrer Außenseite Austrittsöffnungen in vorgegebener Anzahl und Anordnung aufweist, wobei aus diesen beim Überrollen der Oberfläche des Schaumstoffs vorgegebene Mengen an Imprägnat in den Schaumstoff drückbar sind, wobei die Austrittsöffnungen mit in den Schaumstoff einstechenden, vorzugsweise austauschbaren und/oder verstellbaren, Injektionsnadeln gleicher und/oder unterschiedlicher Länge und/oder mit auf den Schaumstoff aufsetzenden und/oder vom Schaumstoff in vorgegebener Entfernung beabstandet gehaltenen und zum Schaumstoff weisenden Düsen ausgebildet sind,
und/oder
bei welcher ein Körper, insbesondere ein Druckbehälter (48) oder ein Vorratsbehälter (52) vorgesehen ist, der auf einer Seite Austrittsöffnungen in vorgegebener Anzahl und Anordnung aufweist, wobei aus diesen nach dem Aufsetzen der Seite auf den Schaumstoff bzw. nach dem Halten der Seite beabstandet in vorgegebener Entfernung vom Schaumstoff und zum Schaumstoff weisend vorgegebene Mengen an Imprägnat in den Schaumstoff drückbar und/oder auf den Schaumstoff aufbringbar sind, wobei die Austrittsöffnungen mit in den Schaumstoff einstechenden, vorzugsweise austauschbaren und/oder verstellbaren, Injektionsnadeln gleicher und unterschiedlicher Länge und/oder mit auf den Schaumstoff aufsetzenden und/oder vom Schaumstoff in vorgegebener Entfernung beabstandet gehaltenen und zum Schaumstoff weisenden Düsen ausgebildet sind.

## Claims

1. Method for partially impregnating a foam of a joint sealing tape, during which a respective predefined amount of impregnate is pressed into the foam at predefined, mutually spaced locations of the foam.

2. Method according to Claim 1, **characterized in that** the locations are on the surface of the foam
and/or
**in that** the locations are inside the foam
and/or
the locations are in one plane or in different planes of the foam.

3. Method according to at least either of the preceding claims, **characterized in that** the amount of impregnate to be introduced at each location, the type of the impregnate, in particular its composition or viscosity, and/or the pressure with which the impregnate is pressed into the foam are selected such that the impregnate spreads around the location to a desired extent.

4. Method according to at least one of the preceding claims, **characterized in that** the locations within designated regions of the foam are next to one another and/or offset one above another in such a way that the impregnate that has spread around a location overlaps the impregnate that has spread around a location next to it and/or offset above it.

5. Method according to at least one of the preceding claims, **characterized in that** the foam, preferably in the form of a foam web (8), is moved along underneath at least one rotatable roll, i.e. impregnating roll (26), or through at least one roll nip formed by two oppositely situated, preferably counter-rotatable rolls, wherein at least one roll on its outer side has a predefined number and arrangement of outlet openings through which the predefined amounts of impregnate are pressed.

6. Method according to at least one of the preceding claims, **characterized in that** multiple rolls rotate next to one another on a common shaft and/or one behind another on multiple shafts.

7. Method according to at least one of the preceding claims, **characterized in that** the predefined amounts of impregnate are pressed through a predefined number and arrangement of outlet openings (54) located on a side of a body, for example a pressure vessel (48) or reservoir (52), wherein the side of the body is placed onto the foam in the manner of a stamp and/or held at a predefined distance from the foam.

8. Method according to at least one of the preceding claims, **characterized in that** the outlet openings are connected to injection needles (28) which pierce the foam and have identical and/or different lengths
and/or
**in that** the outlet openings are connected to nozzles (50) which rest on the foam and/or are held at a predefined distance from the foam.

9. Method according to at least one of the preceding claims, **characterized in that** the injection needles (28) and/or the nozzles (50) are brought into contact with the foam for a predefined period of time, the impregnate being pressed into the foam at the predefined, mutually spaced locations within this period of time.

10. Method according to at least one of the preceding claims, **characterized in that** different impregnates are fed to predefined groups (36) of outlet openings at the same time.

11. Method according to at least one of the preceding claims, **characterized in that** the foam is compressed while it is lying against, or in contact with the roll or the body.

12. Method according to at least one of the preceding claims, **characterized in that** the foam, preferably in the form of a foam web (8), is moved continuously or in batches in a production line, a processing station (16) for the partial impregnation method being provided at suitable locations in the production line.

13. Processing station for carrying out a method for partially impregnating a foam according to one of Claims 1 to 12, the processing station comprising at least one rotatable roll, i.e. impregnating roll (26), preferably a hollow roll (40), which on its outer side has a predefined number and arrangement of outlet openings, from which predefined amounts of impregnate can be pressed into the foam when the roll is rolling over the surface of the foam, wherein the outlet openings are formed with injection needles which pierce the foam, are preferably exchangeable and/or adjustable, and have identical and/or different lengths and/or with nozzles which rest on the foam and/or are held at a predefined distance from the foam and point towards the foam,
and/or
which processing station comprises a body, in particular a pressure vessel (48) or a reservoir (52), a side of which has a predefined number and arrangement of outlet openings, from which predefined amounts of impregnate can be pressed into the foam and/or applied to the foam after the side has been placed onto the foam or after the side has been held at a predefined distance from the foam pointing towards the foam, wherein the outlet openings are formed with injection needles which pierce the foam, are preferably exchangeable and/or adjustable, and have identical and different lengths and/or with nozzles which rest on the foam and/or are held at a predefined distance from the foam and point towards the foam.

## Revendications

1. Procédé d'imprégnation partielle d'une mousse d'un ruban d'étanchéité pour joints, dans lequel une quantité prédéfinie de produit d'imprégnation est pressée dans la mousse à des emplacements prédéfinis espacés les uns des autres.

2. Procédé selon la revendication 1, **caractérisé en ce que** les emplacements sont agencés sur la surface de la mousse
et/ou
**en ce que** les emplacements sont agencés à l'intérieur de la mousse
et/ou
**en ce que** les emplacements sont agencés dans un plan ou dans des plans différents de la mousse.

3. Procédé selon au moins l'une quelconque des revendications précédentes, **caractérisé en ce que** la quantité de produit d'imprégnation à introduire à chaque emplacement, le type du produit d'imprégnation, notamment sa composition ou sa viscosité, et/ou la pression avec laquelle le produit d'imprégnation est pressé dans la mousse sont choisis de manière à ce que le produit d'imprégnation se répartisse autour de l'emplacement dans une mesure voulue.

4. Procédé selon au moins l'une quelconque des revendications précédentes, **caractérisé en ce que** les emplacements sont agencés les uns à côté des autres et/ou en décalage les uns au-dessus des autres à l'intérieur de zones prévues de la mousse de telle sorte que le produit d'imprégnation réparti autour d'un emplacement se chevauche avec le produit d'imprégnation réparti autour d'un emplacement agencé à côté et/ou en décalage au-dessus.

5. Procédé selon au moins l'une quelconque des revendications précédentes, **caractérisé en ce que** la mousse, de préférence sous la forme d'une bande de mousse (8), est déplacée sous au moins un rouleau rotatif ou un rouleau d'imprégnation (26) ou à travers au moins une ligne de contact formée par deux rouleaux opposés, de préférence rotatifs en sens inverse, au moins un rouleau présentant sur son côté extérieur des ouvertures de sortie dont le nombre et l'agencement sont prédéfinis et à travers lesquelles sont pressées les quantités prédéfinies de produit d'imprégnation.

6. Procédé selon au moins l'une quelconque des revendications précédentes, **caractérisé en ce que** plusieurs rouleaux tournent les uns à côté des autres sur un axe commun et/ou les uns derrière les autres sur plusieurs axes.

7. Procédé selon au moins l'une quelconque des revendications précédentes, **caractérisé en ce que** les quantités prédéfinies de produit d'imprégnation sont pressées à travers des ouvertures de sortie (54), dont le nombre et l'agencement sont prédéfinis, agencées sur un côté d'un corps, par exemple d'un réservoir sous pression (48) ou d'un réservoir de stockage (52), le côté du corps étant posé sur la mousse à la manière d'un poinçon et/ou étant maintenu espacé de la mousse à une distance prédéfinie.

8. Procédé selon au moins l'une quelconque des revendications précédentes, **caractérisé en ce que** les ouvertures de sortie sont reliées à des aiguilles d'injection (28) de même longueur et/ou de longueur différente, qui pénètrent dans la mousse
et/ou
**en ce que** les ouvertures de sortie sont reliées à des buses (50) qui se posent sur la mousse et/ou sont maintenues espacées de la mousse à une distance prédéfinie.

9. Procédé selon au moins l'une quelconque des revendications précédentes, **caractérisé en ce que** les aiguilles d'injection (28) et/ou les buses (50) sont mises en contact avec la mousse pendant une durée prédéfinie, le produit d'imprégnation étant pressé dans la mousse aux emplacements prédéfinis espacés les uns des autres pendant cette durée.

10. Procédé selon au moins l'une quelconque des revendications précédentes, **caractérisé en ce que** des groupes prédéfinis (36) d'ouvertures de sortie sont alimentés simultanément en différents produits d'imprégnation.

11. Procédé selon au moins l'une quelconque des revendications précédentes, **caractérisé en ce que** la mousse est comprimée lors du contact ou de l'appui du rouleau ou du corps.

12. Procédé selon au moins l'une quelconque des revendications précédentes, **caractérisé en ce que** la mousse, de préférence sous forme de bande de mousse (8), est déplacée de manière continue ou discontinue dans une ligne de production, un poste de traitement (16) pour le procédé d'imprégnation partielle étant prévu à un emplacement approprié de la ligne de production.

13. Poste de travail pour la mise en œuvre d'un procédé d'imprégnation partielle d'une mousse selon l'une quelconque des revendications 1 à 12, dans lequel au moins un rouleau rotatif ou un rouleau d'imprégnation (26), de préférence un rouleau creux (40), est prévu, qui présente sur son côté extérieur des ouvertures de sortie dont le nombre et l'agencement sont prédéfinis, des quantités prédéfinies de produit d'imprégnation pouvant être pressées dans la mousse à partir de celles-ci lors du passage du rouleau sur la surface de la mousse, les ouvertures de sortie étant réalisées avec des aiguilles d'injection de même longueur et/ou de longueur différente, de préférence interchangeables et/ou réglables, qui pénètrent dans la mousse et/ou avec des buses qui se posent sur la mousse et/ou maintenues espacées de la mousse à une distance prédéfinie et orientées vers la mousse,
et/ou
dans lequel il est prévu un corps, notamment un réservoir sous pression (48) ou un réservoir de stockage (52), qui présente sur un côté des ouvertures de sortie dont le nombre et l'agencement sont prédéfinis, à partir desquelles, après la pose du côté sur la mousse ou après le maintien du côté espacé de la mousse à une distance prédéfinie et orienté vers la mousse, des quantités prédéfinies de produit d'imprégnation peuvent être pressées dans la mousse et/ou appliquées sur la mousse, les ouvertures de sortie étant réalisées avec des aiguilles d'injection de même longueur et de longueur différente, de préférence interchangeables et/ou réglables, qui pénètrent dans la mousse et/ou avec des buses qui se posent sur la mousse et/ou sont maintenues espacées de la mousse à une distance prédéfinie et orientées vers la mousse.
